# EUROPEAN PATENT APPLICATION

(11) **EP 2 295 379 A1**
(43) Date of publication of application: **16.03.2011**
(21) Application number: 09773288.7
(22) Date of filing: 13.06.2009
(51) Int. Cl.: C02F 1/00, B01F 17/52, C09K 3/00

(54) **TREATMENT AGENT FOR AQUEOUS WASTE LIQUID AND TREATMENT METHOD FOR AQUEOUS WASTE LIQUID**

(30) Priority: 01.07.2008 JP 2008172324
(71) Applicant: Fuji Mentenir Co., Ltd., Tokyo 101-0053 (JP)
(72) Inventor: JOH, Yasushi, Chiba-shi Chiba 263-0043 (JP); NAGASE, Toshio, Tsukuba-shi Ibaraki 300-4231 (JP)
(74) Representative: Fuhlendorf, Jörn
(86) International application number: PCT/JP2009/060807
(87) International publication number: WO 2010/001710

(57) **Abstract**

There are provided a treatment agent and a treatment method for physically solidifying an aqueous waste liquid such as a floor wax peeling polluted water and the like simply and also speedily. On an occasion when treating the aqueous waste liquid physically, the treatment agent added to this aqueous waste liquid includes a polymer water-absorbing agent and a dispersing agent which is mixed with a polymer water-absorbing agent in order to disperse this polymer water-absorbing agent in the aqueous waste liquid. By adding this treatment agent to the aqueous waste liquid, the whole of both the substances is solidified into an aggregate of a crushed sponge-like granular material having a size in a range of averagely 0.4mm to 10mm.

## Description

### TECHNICAL FIELD

The present invention relates to a treatment agent which is added to an aqueous waste liquid and which is for treating this aqueous waste liquid physically. In addition, the present invention also relates to a treatment method of an aqueous waste liquid so as to treat the aqueous waste liquid physically by adding a treatment agent to aforesaid aqueous waste liquid.

### BACKGROUND ART

We are discharging a lot of aqueous waste liquids untreatedly from an office building, a factory, a dining saloon, a car repair shop, a gas station, a cooking place of a dining saloon, a hairdresser, a production place of a fermented liquor, a hospital, a special old people facility or the like and also from a home-place which is finally concerned. Then, these aqueous waste liquids cause an enormous environment contamination along with time without any recognition. Consequently, we are surprised by the fact that these environment contaminations, when being synthesized, are a principal cause of an enormous environment contamination. Nevertheless, any countermeasure has not been employed at all with respect to these contaminations and an excellent method with respect to its countermeasure is actually not known at all either.

A temporarily discharged aqueous waste liquid (hereinafter, referred to as "temporal waste liquid") is not a liquid like factory wastewater in which polluted water is discharged constantly and also on a huge scale. However, although such a temporal waste liquid is little in amount and also has a short discharge period individualistically, it becomes an enormous amount when synthesizing the whole total amounts thereof. Then, with respect to the total discharge amount of the polluted water, such a temporal waste liquid is far in excess of the factory discharge water. Realistically, there is no method of dealing with the temporal waste liquid simply and also in a short time period at the occurrence spot thereof, so that the actual situation lies in that such a temporal waste liquid is discharged untreatedly into a drain outlet or the like by ignoring the environmental pollution occurrence. Such an actual situation is an important problem which must be solved promptly from a viewpoint of the prevention of environmental destruction. It should be paid attention to a fact that the absolute amount of the environmental pollutant per unit volume, which is contained in these temporal waste liquids, is much larger than that of the case of the factory discharge water which is discharged heavily. This fact is not clearly exposed yet presently, but it is noteworthy that this fact plays a leading role of the environment contamination.

Next, to explain with respect to an example of such a temporal waste liquid, floor surfaces of floors of buildings or the like such as an office building, a factory, a convenience store and the like are usually coated with resin waxes. However, after this coating, also the beautiful floor surfaces get dirty gradually along with time and in addition, will suffer damage, so that it is usual that they will be beautified and recovered periodically. In this case, first, a liquid release agent is coated on the floor wax of the dirty floor surface and a constant time period for around 10 minutes to 30 minutes is spaced, and thereafter, the floor wax is peeled by a polisher for the floor wax. Then, the polluted water which is produced caused by this peeling (hereinafter, referred to as "peeling polluted water" or "peeling waste liquid") has been treated heretofore at the working spot by being discharged into a sewage drain without any treatment. However, in recent years, an environmental pollution problem as described above has been raised, so that the treatment of such peeling polluted water became an urgent problem.

Such peeling polluted water is not water which is discharged constantly and also on a huge scale like factory wastewater. However, the discharge of the peeling polluted water which occurs by peeling floor wax (hereinafter, referred to as "floor wax peeling waste liquid") is an important problem which must be solved promptly also from a viewpoint of an environment conservation. Here, with respect to the peeling of floor wax, it is a common procedure that the peeling work operation mentioned above is carried out usually by coating a liquid for the peeling containing alkanolamine (hereinafter, referred to as "release agent") on the floor wax and by spacing the above-mentioned constant time period, and the generated strong alkaline peeling polluted water is to be collected in a tubular container (whose volume is about 20 liters) which is referred to as a pail can at each spot of this peeling work operation. Then, the actual situation in which the peeling polluted water obtained by doing in this manner was discharged in a drain outlet has not been paid attention so much heretofore. However, from a viewpoint of environment conservation, the public opinion takes action urgently toward the prohibition of the untreated discharge of the peeling polluted water and the solution thereof is an urgent problem.

In the past, there was no method of taking an action at a peeling working spot for the treatment of the peeling polluted water, so that it often happened that the peeling polluted water was discharged in a drain outlet by ignoring the environmental pollution occurrence. However, from a viewpoint of a prevention of environmental destruction, also a disposal method depending on the acceptance by an industrial waste treatment facility has spread gradually. On the other hand, the industrial waste treatment facility undertakes a role of disposing this peeling polluted water after a procedure such that this peeling polluted water is brought back to a factory which is provided with polluted water purifying equipment and in this a factory, this peeling polluted water is rendered to be harmless by precipitating the substance dissolved in aforesaid peeling polluted water and removing it based on a polluted water treatment method which is used from the past for the purification of the factory discharge water or based on a similar polluted water treatment method thereof.

According to such a purification method, considerably large-scale polluted water purifying equipment is necessary for the treatment of the peeling waste liquid. Consequently, it was practically impossible to carry out the peeling waste liquid treatment by such a purification method at a peeling working spot of floor wax. Then, a technology for treating the peeling polluted water in a short time period at a working spot at which the floor wax is peeled was not known at all heretofore and an advent of such a technology was an object of envy in the business field in which it is necessary to carry out the floor wax peeling.

In the precipitation treatment of a peeling waste liquid until now, there was used a similar treatment method as a treatment method which was used in the treatment of factory wastewater or the like, so that an inorganic-based flocculating agent was used exclusively. When specifically exemplifying such a flocculating agent, there can be cited such as aluminum sulfate, poly aluminum chloride, polyferric sulphate, ferric chloride, calcium chloride, magnesium sulfate, magnesium chloride, aluminum sulfate (that is, mixture of aluminum sulfate, aluminum oxide and water) and the like. All of these flocculating agents are agents which act on dissolved solutes and precipitate the solutes along with time.

All of these flocculating agents are, as mentioned above, agents which act on dissolved solutes and precipitate the solutes along with time. However, when looking towards the actual situation, there is required, in a technology of treating the floor wax peeling waste liquid by using these flocculating agents, a significant long time period (for example, from 20 minutes period or more to several days period) for precipitating the dissolved solid substance. Then, for the process of further separating and removing such a precipitation substance, it is usual that it takes a time period of at least 30 minutes period or more (in some cases, several days period). It should be noted that the technology of treating the floor wax peeling waste liquid by using such a flocculating agent is disclosed in prior patent documents of such as a Japanese unexamined patent publication No. 2000-288554, a Japanese unexamined patent publication No. 2000-301162, a Japanese unexamined patent publication No. 2001-212598, a Japanese unexamined patent publication No. 2007-277455 and the like.

The treatment technology of the floor wax peeling waste liquid is a technology, as disclosed in aforesaid four prior patent documents, which usually uses an inorganic-based salting-out coagulating agent, an inorganic-based acid coagulating agent or an organic-based flocculating agent. In this case, the precipitation substance is called as a floc (FLOC) and is a substance which includes a large quantity of water component and which has adherence of sticky paste. With respect to such a precipitation substance, it takes a long time period for producing precipitation and moreover, it is necessary to employ further treatment in a separation process subsequent to a flocculation process and also, clogging occurs or the like when applying filtration, so that it is usual to have difficulty in the treatment operation thereof. Further, also the treatment of the separated filtrated discharge water is necessary.

In order to practically realize and spread a nonpolluting waste of the floor wax peeling waste liquid, matters described in the following item (a) to item (c) are indispensable.
(a) The peeling polluted water is treated by being collected in a tubular container of about 20 liters referred to as a pail-can, so that a fact that it is possible to treat the polluted water by such a few unit and concurrently, a fact that it is possible to terminate the treatment at least (or as far as possible) in a period of several minutes are indispensable practically.
(b) In order to deal with the peeling polluted water collected in a pail-can at the peeling spot, it is necessary to obtain a fact that it is possible to precipitate the substance (that is, solid substance dispersed or dissolved in the peeling polluted water) which is mixed in a dissolved state or in a thick state at least (or as far as possible) in a period of several minutes and a fact that the state of the precipitation which occurred by doing in this manner is in a property state suitable for a waste process which becomes a next process. In other words, it is important to obtain a fact that there is no adherence in the precipitation substance which occurred by aforesaid precipitation, a fact that a separation work operation of filtration or the like with respect to this precipitation substance is easy, or the like. Then, without solving such a problem, it is practically impossible to treat the peeling polluted water at the peeling spot.
(c) The most desirable configuration lies in a fact in which the whole peeling polluted water changes to a solid-shaped substance without fluidity directly in the inside of the pail-can and concurrently, in which such a solid-shaped substance possess a property to be handled easily. Then, an ideal situation lies in that it is possible for the occurred property of the solid-shaped substance to be a property which is treated directly as a flammable garbage, to be a property which is treated as an industrial waste product, or the like.

To explain further with respect to an example of a temporal waste liquid such as described above, in a case, for example, in which a certain colored paint is prepared and thereafter, another colored paint is prepared subsequently at a spot of paint production, it happens that a container which prepared the initial paint is to be washed before the preparation of the another colored paint. Then, at that time, it is a problem how to treat the wash water containing aforesaid certain colored paint. In addition, a permanent treatment liquid occurs from a hairdresser and an alcohol containing waste liquid occurs from also a production place of a fermented liquor. Further, also a washing liquid of dirty oil which comes out caused by an oil change at a gas station is a temporal waste liquid. In addition, also in a case in which equipment is washed or a portion of the equipment is disassembled and washed in a factory after the operation thereof starts, an aqueous waste liquid occurs temporarily.

On the other hand, also in a university and in a public or private research institute, chemicals used for researches and various sorts of reaction-terminated aqueous waste liquids are discharged as discharge water still in a state of containing an organic compound and an inorganic compound. Within such aqueous waste liquids, there exist an oil which became needless, an aqueous solvent which became needless, a non-water-soluble organic solvent which became needless, an acid waste liquid of hydrogen-ion concentration (hereinafter, referred to as "pH") 5 or less, an alkaline waste liquid of pH9 or more, and the like. Furthermore, within aforesaid aqueous waste liquids, as special waste liquids, there exist such as a chromic acid mixed liquid, a photographic fixing liquid, a photographic developing solution or the like, a heavy metal compound solution containing cadmium, lead, hexavalent chromium, zinc or the like, and the like.

In addition, also in a hospital, an aqueous waste liquid causing environmental pollution, such as an infectious contaminated object which includes human-waste and hematemesis of a patient, sputum sucked-in from trachea of a patient and the like, is discharged into a sewage drain without being treated completely. Although such an actual situation must be solved promptly, there is no excellent waste liquid treatment method yet, so that presently, regulation is not applied at all and an unchecked situation is continuing. Then, it is said that the total amount of these temporal waste liquids is in excess of that of the factory waste liquids which are discharged continually. However, there is no method of treating these temporal waste liquids at the spot rapidly, also in a short time period and also simply with high-percentage completion rate, and this matter is an environmental pollution problem which must be solved promptly.

In the treatment technology of temporal waste liquids until now, an inorganic-based flocculating agent or a polymer-based flocculating agent is used exclusively, which is similar to a case of the treatment method used for a factory wastewater treatment or the like and anyhow, it is usual to utilize a flocculating agent. When exemplifying such flocculating agents, as mentioned above, there can be cited such as aluminum sulfate, poly aluminum chloride, polyferric sulphate, ferric chloride, calcium chloride, magnesium sulfate, magnesium chloride, aluminum sulfate (that is, mixture of aluminum sulfate, aluminum oxide and water) and the like.

When further citing an example of a temporal waste liquid such as described above, there exists a waste liquid in a hospital (hereinafter, referred to as "hospital waste liquid") which is not a waste liquid discharged continually in full-time and also heavily such as the wastewater discharged continually under the operation of a factory and which is discharged by a temporarily limited amount in the inside of a hospital as a temporal waste liquid. Such a hospital waste liquid is few in the amount thereof, but disease-causing germs are frequently contained therein and also, it is always associated with dangerousness of an infection disease or the like. Consequently, although an excellent treatment method of treating aforesaid hospital waste liquid reliably and also hygienically within a short time period in which the manipulation is simple and also safe is an object of envy, the actual situation lies in a situation in which there is no excellent treatment method.

The treatment of the polluted substance discharged from a patient is one of the most troublesome treatments in medical facilities starting from large hospitals and reaching various kinds of clinics, private-practice doctor facilities and the like. For the treatment of such a polluted substance, a perfect and hygienic method is required from a viewpoint of infection prevention and from a viewpoint of environment contamination prevention, but there has been used an outdated method for the polluted substance treatment continuously still in a state of being normalized.

In a medical facility such as a hospital and the like, there are discharged a lot of polluted substances such as hematemesis, vomitus or sputum which is discharged from a patient; a suctioning liquid of a secretion from a lung inside, which is sucked-in from a respiratory organ; an aqueous discharge liquid of a body-liquid, a blood or the like, which comes out from a patient at a time of surgery; excrement of a patient; and the like. Although the method of treating these polluted substances hygienically, also simply and also completely is an object of an envy method, there are still few excellent countermeasures and the actual situation lies in a situation in which a nurse or a healer carries out the treatment by an outdated method.

### DISCLOSURE OF THE INVENTION

### Problem to be Solved by the Invention

When looking towards the actual situation, as being disclosed in the above-mentioned four prior patent documents, the treatment method in the past in which a flocculating agent is used requires a significant long time period (for example, from 20 minutes period or more to several days period) for precipitating the dissolved resin wax. Then, it is usual for the process of further separating and removing the peeling polluted water to require a time period of at least 30 minutes period or more (in some cases, several days period). Also, in the treatment method of the floor wax peeling waste liquid, which is disclosed in these four prior patent documents, an inorganic-based salting-out coagulating agent, an inorganic-based acid coagulating agent or an organic-based flocculating agent is to be used. Then, in case of the treatment method of such a peeling waste liquid, it takes time, in the flocculation process, for forming a floc or the like and concurrently, a separation process subsequent to the flocculation process is accompanied and further, there is required a treatment of filtration discharge water separated in the separation process. Consequently, the treatment method of the peeling waste liquid in aforesaid four prior patent documents requires to carry out these treatments in parallel with the wax peeling within the limited work operation time at the peeling spot of the floor wax, so that it is unrealistic. Then, even an assumption could not be made at all in the past that it is possible to solidify all of the peeling polluted water into granular shapes per pail-can unit at the peeling spot of the floor wax within a short time period. In addition, even a dreamy thought could not be made in the past about a peeling polluted water treatment method in which a filtration process is not required either and a drainage liquid of treatment does not occur either.

Further, even an assumption could not be made at all in the past that it is possible to solidify the whole of the temporal waste liquid into granular materials in a small-sized container at the occurrence spot of the temporal waste liquid including the occurrence spot of the floor wax peeling waste liquid within a limited short work operation time period and in a short time period such as a few minutes. In addition, even a dreamy thought could not be made about a waste liquid treatment method in which a separation process of a filtration process or the like is not required either and a drainage liquid of treatment does not occur at all.

In order to practically realize and also to spread a fact that a temporal waste liquid is systematized for non-environmental-pollution at the occurrence spot, matters described in the following item (d) and item (e) are required.
(d) It is required that the temporal waste liquid collected in a small-sized container can be treated by such a few unit quickly and also, that the treatment can be terminated at least (or as far as possible) in a period of several minutes in which possibility and impossibility about treating in such a short time period will decide the fate on an occasion of the practical realization thereof.
(e) The most desirable treatment configuration lies in that the whole of the temporal waste liquid will change to solid-shaped particles directly in a container collected at the working spot in which such solid-shaped particles will obtain a property easy to be handled. Then, it is an ideal that the occurred solid substance can be treated directly as a flammable garbage depending on the property thereof, or the like. In addition, it is desired to reutilize aforesaid granular solid substance as a fuel.

In order to realize and also to spread a method in which the non-environmental-pollution systematization of the hospital waste liquid and the treatment thereof are carried out at the occurrence spot practically and also simply, matters described in the following item (f) to item (h) are required.
(f) It is required that the hospital waste liquid can be treated by a small amount of unit quickly and that the treatment can be terminated at least in a period of several minutes, and possibility and impossibility about treating in such a short time period will decide the fate on an occasion of the practical realization thereof.
(g) The most desirable treatment configuration lies in that the whole of the waste liquid which occurs in a hospital will change to solid-shaped particles directly at the occurrence spot thereof and obtains a property in which the process thereof is safe and concurrently, is easy to be handled hygienically. Then, it is an ideal that the solid-shaped particles can be applied with incineration treatment directly depending on the property thereof, or the like.
(h) Through various kinds of processes during the work operation and after the work operation, the manipulation of aforesaid treatment must shut out all sorts of infectiveness, must be safe, also must be sanitary and must be provided with simpleness.

As a result of studying out a method of treating a floor wax peeling waste liquid simply and also hygienically in a short time period and promoting keen examinations toward the practical realization thereof, the inventors of the present invention studied out useful technique and technology which are applicable widely and also universally with respect to a temporal waste liquid such as a hospital waste liquid and to other aqueous waste liquids, and a situation was obtained in which the present invention was thought up.

### Effect of the Invention

A first effect accomplished by the present invention lies in a fact that the whole of the aqueous waste liquid is solidified to an aggregate in which plural pieces of crushed sponge-like (in other words, in a state of such as crushed sponge) granular material having a size of a diameter desirably around several millimeters will gather together within a short time period (for example, in mere few minutes) caused by the treatment depending on the treatment agent.

A second effect accomplished by the present invention lies in a fact that the whole of the aqueous waste liquid is solidified to a granular material, so that there is not required a separation process such as filtration and the like.

A third effect accomplished by the present invention lies in a fact that there is no liquid discharge at all in the treatment of the aqueous waste liquid. Consequently, an environment contamination caused by the discharge water, which was a problem in the past, does not exist at all. Further, the waste liquid absorbed at the time of solidification will substantially never releach out along with time and there are presented stable properties including also preservability of aforesaid granular material. In particular, even a dreamy thought could not be made about such a treatment method in which liquid disappears even for one drop from the hospital waste liquid (in other words, aforesaid granular material) and in which aforesaid granular material presents stable properties including also preservability and there is no danger of infection or the like.

A fourth effect accomplished by the present invention lies in a fact that it is very easy to handle the properties of the produced granular solidified material. More specifically, in aforesaid granular solidified material, there exists no adherence such as seen in the block shaped solid substance separated by the coagulating agent, which is disclosed in aforesaid four prior patent documents and aforesaid granular solidified material has a configuration which is granular (or powdery) and is easy to be handled. Also, when carrying out the present invention, the volume increase of the whole waste liquid caused by the addition of the solidified treatment agent is very small and it is 10 volume% or less (in many cases, 5 volume% or less). This fact is because aforesaid solidified treatment agent itself is bulky, but the actual weight of this treatment agent is small.

A fifth effect accomplished by the present invention lies in a fact that it is possible to deal with the produced solid substances directly as flammable garbages or it is possible to dispose of them as ordinary business-place based general waste substances. In the present invention, the solid substance produced from the temporal waste liquid desirably has a diameter of a size around several millimeters and desirably is a crushed sponge-like granular material, so that the solid substance has a structure in which the specific surface area thereof is large and the water component absorbed and stored at the time of the incineration treatment will vapor easily. Also, it is easy for the heat to be conducted to the inside of aforesaid particle and further, aforesaid particle is porous, so that the supplying property of oxygen or air is excellent and a structure of supporting the flammability is realized.

A sixth effect accomplished by the present invention lies in a fact that even if it is any kind of temporal waste liquid (for example, any kind of hospital waste liquid), if it includes a water component, it is possible to apply the present invention thereto without any relation to existence or nonexistence of fluidity. Consequently, if a water component is included, it is allowed for such a temporal waste liquid to be in a solution state, to contain oil, to be an emulsion and to be a milky juice or a suspension liquid, and also, it is possible to apply the present invention universally to the temporal waste liquid even if it is in a precipitation shape of a minute particle or even if it disperses uniformly by shaking. Also, without requiring the kind of the aqueous waste liquid, the present invention also has universality so as to be applicable only if the water component amount in the aqueous waste liquid is 10% or more of the whole thereof. For example, even if the temporal waste liquid is a floor wax peeling waste liquid and also, even if it is a sticky hospital waste liquid without fluidity such as a vomited substance of a patient, it is possible to accomplish the treatment thereof completely depending on the treatment agent according to the present invention. In the past, there did not exist a technology having universality such as that of the present invention.

A seventh effect accomplished by the present invention lies in a fact that the aqueous state is not always required to become, for example, in a pseudo uniform state (in other words, quasi uniform state) such as in case of forming emulsions and it is possible, also with respect to a solution separated into two layers such as a mixture of oil and water, to carry out the waste liquid treatment without any problem by using the treatment agent according to the present invention.

An eighth effect accomplished by the present invention lies in a fact that in case of granular-materializing an aqueous waste liquid containing flammable organic solvent or oil according to the present invention, it is possible to cause the inflammability of this waste liquid to disappear.

A ninth effect accomplished by the present invention lies in a fact that within a short time period (for example, few minutes) at the occurrence spot of the hospital waste liquid, it is possible to solidify the whole of this waste liquid into an aggregate in which plural pieces of granular material gather together. This fact is a matter in which even an assumption could not be made at all in the past and mixing the mixing powder-body for treatment with the hospital waste liquid becomes the final process and there is no necessity, in particular, of a post-process of a separation process or the like subsequent thereto.

A tenth effect accomplished by the present invention lies in a fact that there is a wide width of application such that the present invention is applicable without asking for the kind of the hospital waste liquid if the aqueous content in the hospital waste liquid is 10Wt% or more of the aqueous waste liquid. In the past, there did not exist such a waste liquid treatment technology which has universality such as stated above.

As clear from aforesaid first to tenth effects, it is possible, according to the present invention, to solve various sorts of problems in which practical realization was difficult. For example, in order to spread a matter of dealing with the hospital waste liquid at the occurrence spot practically and also hygienically until the final process in a state of guaranteeing perfect infection prevention, an ideal lies in a state in which it is possible to treat the hospital waste liquid quickly at the occurrence place, it is possible to terminate the treatment at least (or if possible) in a period of several minutes, the whole of the hospital waste liquid will change to a solidified granular material, the property of this changed solidified material shows a property in which a combustion treatment can be achieved directly, and the like.

### Means for solving the Problem

The present invention, for its first viewpoint, relates to, in a treatment agent which is added to an aqueous waste liquid and which is for treating this aqueous waste liquid physically, a treatment agent for an aqueous waste liquid characterized by including: a polymer water-absorbing agent and a dispersing agent mixed with aforesaid polymer water-absorbing agent in order to disperse this polymer water-absorbing agent in aforesaid aqueous waste liquid, wherein it is constituted, when being added to aforesaid aqueous waste liquid, such that the whole of aforesaid aqueous waste liquid and aforesaid treatment agent is solidified to an aggregate in which plural crushed sponge-like pieces of granular materials having sizes averagely in a range of 0.2mm to 10mm (preferably, 0.25mm to 8mm and more preferably, 0.3mm to 6mm) gather together. Also, the present invention, for its second viewpoint thereof, relates to a treatment method of an aqueous waste liquid so as to treat aforesaid aqueous waste liquid physically by adding a treatment agent to the aqueous waste liquid, characterized in that aforesaid treatment agent includes a polymer water-absorbing agent and a dispersing agent mixed with aforesaid polymer water-absorbing agent in order to disperse this polymer water-absorbing agent in aforesaid aqueous waste liquid, wherein by adding aforesaid treatment agent to aforesaid aqueous waste liquid, the whole of aforesaid aqueous waste liquid and aforesaid treatment agent is to be solidified to an aggregate in which plural crushed sponge-like pieces of granular materials having sizes averagely in a range of 0.2mm to 10mm (preferably, 0.25mm to 8mm and more preferably, 0.3mm to 6mm) gather together.

One of the features in the present invention lies in a fact that the treatment agent for an aqueous waste liquid contains a polymer water-absorbing agent. Then, in aforesaid first and second viewpoints of the present invention, it is possible for aforesaid polymer water-absorbing agent to use at least one kind within sodium polyacrylate which may be a synthetic polymer, a copolymer of sodium polyacrylate, a bridge body which is formed by bridging sodium polyacrylate with N,N methylenebisacrylamide or the like, and a polyacrylic acid-based polymer water-absorbing agent containing a bridge body of a copolymer of aforesaid sodium polyacrylate. Further, it is possible for the polymer water-absorbing agent used in the present invention to use at least one kind selected from a third group composed of a first group composed of aforesaid polyacrylic acid-based polymer water-absorbing agent and a second group composed of a polyaspartic acid, polyacrylamide, a derivative of aforesaid polyacrylamide (for example, poly N,N' dimethylacrylamide and poly N-isopropylacrylamide) and a synthetic polymer water-absorbing agent containing the bridge body of aforesaid polyacrylamide and the bridge body of aforesaid derivative.

Further, one of the distinctive features in the present invention lies in a fact that the treatment agent for the aqueous waste liquid contains a dispersing agent for dispersing aforesaid polymer water-absorbing agent in the aqueous waste liquid. It is possible for aforesaid dispersing agent to use a wood powder, a cellulose powder, ethylcellulose, methylcellulose, a powderized rice husk, a cellulose-based powder such as a fine powder made by crushing straws or dead leaves in powder form after being dried, a glucose-based powder such as a rice bran which occurs in a rice-cleaning mill at the time of rice-cleaning, and the like. In addition, instead of or in addition to the dispersing agent of aforesaid cellulose base, aforesaid glucose base and the like, it is also possible for the dispersing agent to utilize a substance such as Okara (bean curd refuse) which is a by-product at the time of tofu-production and which is thrown away presently for the reason that there is no useful use application thereof.

It is desirable for those dispersing agents to be agents which are insoluble into water and which are flammable. As described later, this matter is important when treating a solidified temporal waste liquid as a burnable garbage. It is preferable for the dispersing agent used when carrying out the present invention to have both the properties of water absorbability and water retentionability. Here, the water absorbability means an ability of absorbing the water component into the substantial tissue of the substance thereof. Also, the water retentionability means a phenomenon that an ability of keeping the water component on the circumference of the substance thereof is excellent apart from the ability of absorbing the water component into the substantial tissue of the substance thereof. Then, the water retentionability fulfills such an important role as to provide an environment in which the water component is absorbed easily to the substantial tissue inside of the dispersing agent and to the substantial tissue inside of the polymer water-absorbing agent which intervenes between the dispersing agents. Consequently, the dispersing agent in the present invention, which can concurrently possess both the performances of water absorbability and water retentionability, heightens both the effects of water absorbability and water retentionability synergistically and applies proper softness to the solidified particles. Then, the solid substance which is an aggregate of these solidified granular materials can exclude a sticky characteristic which is a problem of a precipitation substance (that is, floc) occurring in the method in the past and produces a granular material group (that is, an aggregate of granular materials) having a property which is powdery and easy to be handled. This matter is an important factor from a viewpoint of practicality.

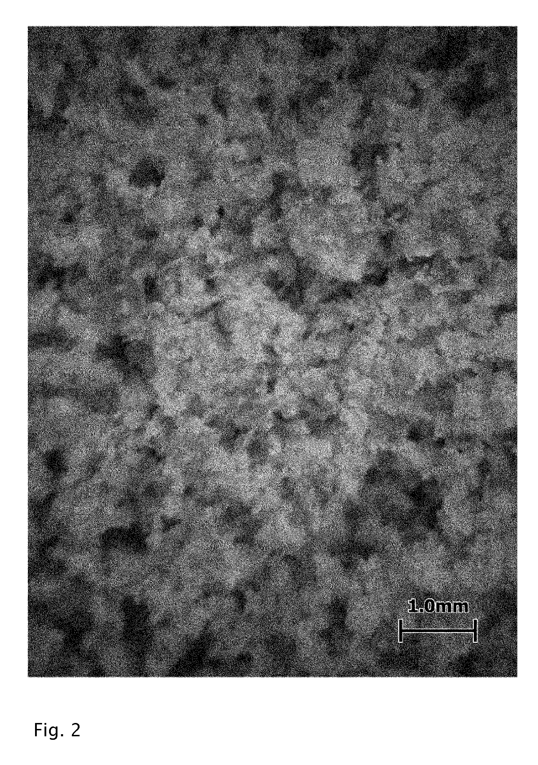

There exist a wood powder and a rice bran for the agents which are strikingly useful in particular within the exemplified dispersing agents as mentioned above. An important factor in which these of the wood powder and the rice bran exert the effect according to the present invention sufficiently lies in a micro-like (in other words, microscopic) feature thereof. The dispersing agent used for the present invention exerts only little effect if the powder shape thereof is in a block shape, in a stick shape or in a rod shape, and an excellent configuration of the agent lies in a structure in which entanglements are formed one another in fibril shape (that is, aggregate shape of microfibrils) and in which a lot of gaps exist among these microfibrils (in other words, structure of being crushed finely and of being constituted as an aggregate in which plural pieces of granular material which gather together in a state in which a large number of strings of microfibrils are entangled one another further gather together). In order to render the wood powder to become in a state of having such a structure, it is necessary, by crushing the wood powder further mechanically, that the size thereof is to be made in a powder form until it becomes 50 mesh pass 50Wt% or more. It should be noted in the text of the specification that the wording of aforesaid "mesh" is dependent on the Japanese Industrial Standards JIS Z8801-1932 "standard sieve". Further, in a case in which a high level dispersibility is required for the wood powder, it is preferable for the size of the wood powder to be 100 mesh pass 50Wt% or more, it is more preferable to be 100 mesh pass 90Wt% or more and in some cases, it is better to be 400 mesh pass 90Wt% or more. These aspects are true also with respect to cellulose-based granular materials other than the wood powder. On the other hand, the particle of the rice bran which is glucose-based is provided fundamentally with a property such as obtained when crushing dried fish of a dried bonito (see FIG. 2). It should be noted in this FIG. 2 that the actual dimensions are shown by the scale in FIG. 2. Consequently, it is possible for the rice bran which occurs in a rice-cleaning mill at the time of rice-cleaning to be used excellently as a dispersing agent (or one component of a dispersing agent) in the present invention even if it is not crushed into smaller pieces in particular.

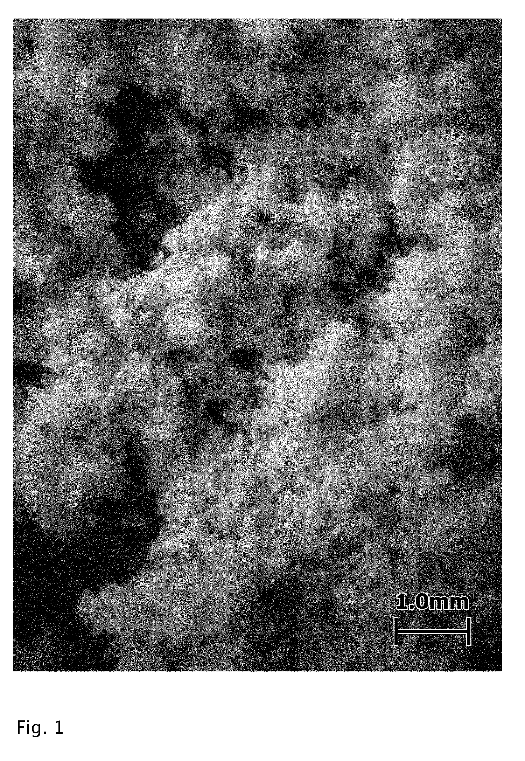

By adding stress to the wood powder mechanically and crushing it sufficiently, the inventors of the present invention was successful in rendering the wood powder to take such a microscopic structure in which the microfibrils of the wood powder gather together 3-dimensionally and also at random and there exist gaps among these microfibrils (see FIG. 1). It should be noted in this FIG. 1 that the actual dimensions are shown by the scale in FIG. 1. There was realized a fact that the entangling of such microscopic microfibrils renders this wood powder to possess water retentionability around 3 to 5 times of the weight of the wood powder which is a dispersing agent and concurrently with this fact, also the water absorbability of the wood powder was improved so as to be around 2 to 3 times of the weight of the wood powder which is a dispersing agent. It is conceivable with respect to the improvement of such water absorbability that the absorption of the water component by the wood powder was improved spectacularly caused by a fact that substantial tissue walls of the dispersing agent were destroyed in the process of mechanical crushing, and this aspect is a discovery made by the inventors of the present invention. It is conceivable that such a surprising effect according to the present invention is caused by a fact that there is provided an occasion in which an aqueous waste liquid aiming a treatment is kept in the gaps of aforesaid microfibrils group by being sucked depending on a capillary phenomenon and thereafter, the polymer water-absorbing agent which disperses in and is entangled with aforesaid microfibrils group absorbs the aqueous waste liquid easily and at the same time, is caused by a fact that also the water absorbability of the dispersing agent itself was improved spectacularly.

The phenomenon explained here can be seen similarly also in case of a rice bran. It should be noted with respect to the rice bran that thermally treated one is used preferably. Depending on such a thermal treatment of the rice bran, microbes attached to this rice bran become extinct and mold growth during the storage of the rice bran thereafter is prevented. Also, it becomes easy for the particle group of the rice bran to be crushed during the operation until reaching the productization of the treatment agent, so that the particle of the rice bran becomes in a small size and also, becomes rich in uniformity and as a result thereof, mixing performance of the rice bran to the aqueous waste liquid mentioned later will be improved. Although being different a little bit from the illustrative embodiment of such a wood powder in which microfibrils are entangled, the rice bran has a configuration in which there are a lot of amorphous angular cuts (in other words, configuration of an aggregate in which plural pieces of granular material whose surfaces are abundant in nonuniform concavity and convexity gather together), and there exist a lot of gaps for this aggregate (see FIG. 2).

An aspect in which aforesaid crushed wood powder and rice bran are different from other kinds of powders which resemble those above lies in that there exists quick uniform mixed-ability therein with respect to the aqueous waste liquid. Generally, even if a powder is tried to be mixed with a liquid, for example, as can be seen when a food starch, cocoa or a powdered essence of soup is dissolved into hot water, it happens not infrequently that the mixed powder will lump in a ball shape, so-called, to an "unmixed-in lump of flour. Then, when becoming once in a lumped state in this manner, there is difficulty in dispersing aforesaid powder uniformly. Also, it is not possible for these ball shaped powders to disperse uniformly even if time elapses as long as without being heated and without tremendous stirring. Then, such a phenomenon is a fact that everybody has experienced.

It is possible for the wood powder and the rice bran to disperse the whole treatment agent including the polymer water-absorbing agent into the aqueous waste liquid almost instantaneously and this fact shows a standout excellent performance of the wood powder and the rice bran. Then, the inventors of the present invention discovered that a phenomenon that the wood powder and the rice bran can exert such a performance is based on a fact that contribution of the surface active effect of lignin contained in the wood powder and of rice oil contained in the rice bran is large. It is conceivable that a preferable natural mixing state with respect to such components and a fine structure with respect to the configuration of creating a lot of gaps which absorb the aqueous waste liquid depending on a capillary phenomenon do contribute synergistically and also largely for the immediately-effective mixing. This aspect is an alien property which the wood powder and the rice bran have, and such a result of discovery by the inventors of the present invention was a key for the success of the practical realization of the present invention.

As mentioned above, in order to make it possible to sufficiently exert an effect that the wood powder and the rice bran can disperse the whole treatment agent into the aqueous waste liquid almost instantaneously, it is necessary practically to satisfy an essential basic condition. This basic condition means that the wood powder and the rice bran used in the present invention must keep a certain water component. Then, unless the wood powder and the rice bran keep a certain water component, not only the characteristic that the whole treatment agent can disperse into the aqueous waste liquid almost instantaneously cannot be exerted but also it happens that the wood powder and the rice bran put-in into the aqueous waste liquid will float to the upper portion of the aqueous waste liquid and they do not blend right in with the aqueous waste liquid even if the treatment agent is stirred. The inventors of the present invention found out that such a phenomenon occurs when the water component of the wood powder and the rice bran has little volume. Then, when realizing the present invention practically, it is desirable to render such a phenomenon to be nothing. As a result of promoting the research with respect to this matter, the inventors of the present invention found out that it is necessary for this solution to render the wood powder, the rice bran and other dispersing agents to contain 4Wt% to 60Wt% water component. This aqueous content is preferably, 6Wt% to 40Wt% and more preferably, is 8Wt% to 35Wt%. When this aqueous content is smaller than 4Wt%, not only the effect of the dispersing agent is not exerted by a reason that wettability becomes impaired caused by an advent of a non-affinity phenomenon of the dispersing agent with respect to the aqueous waste liquid but also there is dangerousness in which a dispersing agent such as a wood powder will be scattering during the treatment work operation and will be inhaled by the worker. Also, when aforesaid aqueous content is larger than 60Wt%, enhancement of the effect of the dispersing agent cannot be obtained sufficiently and furthermore, powders of an added dispersing agent such as a wood powder, a rice bran and the like will sink to the bottom of the aqueous waste liquid, so that it sometimes happens that a nonuniform dispersion occurs and it sometimes happens that nonuniformity is brought about in the whole solidification phenomenon between the aqueous waste liquid and the treatment agent. When rendering the wood powder, the rice bran and other treatment agents to contain a certain water component, also the effect of preventing the powder scattering of the treatment agent during the treatment work operation is outstanding, and also this matter is a discovery of the inventors of the present invention.

In a case in which the aqueous content of the dispersing agent powder of such as a wood powder, a rice bran or a mixture of the both thereof is 6Wt% or more (in particular, 8Wt% or more), surprisingly, even if means referred to as stirring is not employed at all, if coefficient of viscosity of the aqueous waste liquid is low, only by putting-in dispersing agent powders onto the aqueous waste liquid, these dispersing agent powders begin to sink rapidly into the aqueous waste liquid. Then, the inventors of the present invention discovered such a phenomenon that it is possible to exert the effect according to the present invention without stirring the dispersing agent powders or the like for the reason that all the dispersing agent powders carry out gentle sinking in a short time period such as 30 seconds to 1 minute. In this case, even when the aqueous waste liquid is sticky such as a certain kind of hospital waste liquid, the dispersing agent is mixed uniformly and also simply depending on a slight stirring, so that there is provided the most preferable phenomenon from a viewpoint of practicality. Consequently, it is possible to eliminate one process within a series of treatment work operations, so that this matter is a very important discovery. Also in this case, when the aqueous content exceeds 60Wt%, a portion of the dispersing agent sinks to the bottom of the aqueous waste liquid nonuniformly and it sometimes happens that nonuniformity occurs for the solidification phenomenon, so that this is not preferable.

A fact that the wood powder and the rice bran show a unique effect is as mentioned above, and the inventors of the present invention found out also a fact that a mixture of the wood powder and the rice bran plays a very important role. The wood powder has a large number of features as previously mentioned, but practically, health concern exists in the wood powder. The wood powder of 100 mesh pass 50Wt% or more which is used suitably in the present invention is a powder which is very fine and has a small specific gravity, so that there is a tendency that scattering caused by soaring to space occurs during the treatment work operation. Consequently, there exists dangerousness in which the worker will inhale such a wood powder and in case of continuing the inhale daily, it may be related to an occurrence of a nasal cavity cancer.

As a result of promoting a keen examination, the inventors of the present invention discovered a fact that when using a dispersing agent constituted by mixing the rice bran with the wood powder by an amount of 3Wt% to 60Wt% (preferably, 4Wt% to 40Wt% and more preferably, 5Wt% to 30Wt%) of the dispersing agent, it is possible to prevent the scattering of the wood powder, which is observed frequently during the treatment work operation in case of using a dispersing agent of only a wood powder, substantially completely. In this case, it is allowed for the wood powder to be 40Wt% to 97Wt% (preferably, 60Wt% to 96Wt% and more preferably, 70Wt% to 95Wt%) of aforesaid dispersing agent. Then, it is allowed for the dispersing agent to be constituted only by the wood powder and/or the rice bran and also, to contain the wood powder and/or the rice bran as a main component. Such a matter is very important when carrying out the present invention. Also, the inventors of the present invention found out a fact that it is possible to prevent the powder scattering at the time of treatment work operation when making the wood powder contain the water component by 4Wt% to 60Wt%. Consequently, when carrying out the present invention, it has an important meaning in the present invention that a water component of 4Wt% to 60Wt% (preferably, 6Wt% to 40Wt% and more preferably, 8Wt% to 35Wt%) is to be contained in the wood powder and the rice bran which are used as dispersing agents.

Further, another one of the features in the present invention lies in broadness and universality of an applicable range such that it is possible, if only the aqueous waste liquid contains a water component, to be a treatment object in the present invention. In this case, if the water component of the aqueous waste liquid is 10Wt% or more (preferably, 20Wt% or more, and more preferably, 30Wt% or more) with respect to the whole quantity of the aqueous waste liquid, it is possible for such an aqueous waste liquid to be applied with the present invention.

Still another one feature in the present invention lies in universality such that it is possible to apply the present invention even whichever aqueous waste liquid it is (in other words, even if it is in an uniform phase and also, even if it is phase-separated by a water component and an oil layer) without relating to the kind thereof. This matter is because the fact that the dispersing agent which is a constituent of the treatment agent used in the present invention has a surface active performance provided with both the aspects of lipophilicity and hydrophilicity contributes largely and so, there is provided with an indispensable factor for the practicality exertion with respect to the treatment of the aqueous waste liquid by the polymer water-absorbing agent. The polymer water-absorbing agent is usually in a powder shape or in a small granular shape. Then, in order that the polymer water-absorbing agent absorbs the water component into the particle inside thereof, these water molecules must diffuse efficiently into the particle. Easiness of the invasion of such a water molecule into the particle inside of the polymer water-absorbing agent is controlled firstly by a resistance (this is referred to as "particle internal diffusion resistance") with respect to diffusion of the water molecule in the particle inside.

On the other hand, when particles of the polymer water-absorbing agent are hardened by being closely contacted each other, the water molecule must move between aforesaid particles and this movement is affected largely by the factor which controls the diffusion between particles. More specifically, it becomes under the control of the diffusion resistance (this is referred to as "external diffusion resistance") on the outside of each particle (in other words, space between particles). When particles form a block by becoming in a bonding state each other or are intertangled each other in a close relation, the external diffusion resistance is large and therefore, the diffusion of the water molecule is disturbed, and consequently, it happens that the speed in which the water is absorbed into the polymer water-absorbing agent becomes remarkably slow. The inventors of the present invention found out a fact that the speed in which the water is absorbed into the polymer water-absorbing agent is controlled overwhelmingly by this external diffusion resistance and brought the present invention to completion.

In order to proceed with the treatment promptly at a working spot for treating the aqueous waste liquid which is intended by the present invention, the aqueous waste liquid must be absorbed promptly into the polymer water-absorbing agent by an overall view. Consequently, a technique for minimizing the external diffusion resistance mentioned above becomes one factor for determining possibility and impossibility of the practical realization of the present invention. The dispersing agent used in the present invention plays a key role for achieving this aspect. In the present invention, there is guaranteed a matter that depending on a fact that the used dispersing agent exists by intervening between individual minute particles of the polymer absorbent agent, the movement by the diffusion of aforesaid minute particle is accelerated and concurrently, a phenomenon in which depending on a fact that the minute particles of the polymer water-absorbing agent contact each other, these minute particles grow to a bulk by being contacted one another is prevented completely and as a result thereof, the absorbing action of the aqueous waste liquid to the polymer water-absorbing agent proceeds smoothly.

In order to make a distribution sufficiently excellent such that aforesaid dispersing agent intervenes between the particles of the polymer water-absorbing agent uniformly and also equally, there generally exists an essential condition required for the dispersing agent. The inventors of the present invention found out that this condition lies in the size and uniformity of the particles constituting the dispersing agent. It can be said that this matter is an important knowledge of the inventors of the present invention toward the practical realization and is an important discovery. For example, in case of using a sawdust for the dispersing agent, the sawdust has a large particle size and in addition, the particle shape thereof is not stabilized either, so that it is difficult to be mixed with the polymer water-absorbing agent equally as a dispersing agent, and it easily becomes in a state of nonuniform dispersion. Consequently, even if mixing the sawdust cautiously and carefully with the polymer water-absorbing agent, a group in which sawdusts gather one another will occur easily in the mixture inside. As a result thereof, it is not possible for the sawdusts to intervene among the particles of the polymer water-absorbing agent by dispersing equally therein and therefore, it was found out that it is not possible to solidify the aqueous waste liquid in a short time period. More specifically, it was not possible for the aqueous waste liquid to escape completely from a gelled semisolid-shaped floc state even if spending a long time period and a fluid sol state was maintained. Then, it was found out that a dry process must be provided further and drying must be applied by spending a significant time period in order to solidify aforesaid aqueous waste liquid. Under such circumstances, there exists a reality in which it is utterly impossible to complete a solidification treatment of an aqueous waste liquid in a short time period (see comparative example 4 mentioned later). The inventors of the present invention found out that this matter is caused by a fact that in a case in which the particle shape is comparatively large and also the particle size is nonuniform such as those of the sawdust, there is a tendency in which the particles of the sawdust becomes a bulk by being intertangled one another, so that the sawdust particles do not mix together excellently with the particles of the polymer water-absorbing agent.

In order to achieve the role of the dispersing agent in the present invention, it is desirable to apply the particle size of the dispersing agent of cellulose-base or the like, which is represented by a wood powder, a cellulose powder or the like, with uniformity of a certain level or more. The present invention was completed based on an important knowledge that this fact makes the dispersing agent intervene between the particles of the polymer water-absorbing agent uniformly and will become an ability in which the polymer water-absorbing agent is made to disperse equally in the aqueous waste liquid. In case of a cellulose base or the like of a wood powder or the like, it is desirable for these particles of the dispersing agent to be 50 mesh pass 50Wt% or more (preferably, 100 mesh pass 50Wt% or more, and more preferably, 100 mesh pass 90Wt% or more).

It was found out that the difference on the performance of dispersibility between the sawdusts whose particle diameters are large and also are irregular and the wood powders whose particle diameters are controlled finely as mentioned above is large, and that this difference exceeds the level which is simply expected from a viewpoint of dispersibility. This fact expresses a property of a solidified particle which solidified the aqueous waste liquid. When using a wood powder whose particle shapes are controlled by being crushed and chipped, it was found out surprisingly that the solidified particles become a particle group of a hand feeling of a dry (that is, dried) feeling in a powdery state (or in a state of becoming granular) with excellent reproducibility. This fact shows an important characteristic in an aspect of being easy to handle practically and the inventors of the present invention found out that the wood powder and the rice bran specially-crushed as described above are outstandingly excellent as the dispersing agent used in the present invention. It is conceivable microscopically that this fact happens because microfibrils groups formed at the time of the wood powder manufacturing are entangled one another and the gaps thereof become porous (that is, porous structure as shown in FIG. 1) and therefore, there are formed surfaces which are rich in nonuniform concavity and convexity, and the aqueous waste liquid will be sucked-up quickly owing to the capillary phenomenon. In this manner, the inventors of the present invention found out a fact that there is added also with a contribution of a fact that the specific surface area of the wood powder particles increases and so, the wood powder will absorb the aqueous waste liquid to the maximum. This fact is a discovery of the inventors of the present invention, which is very important when achieving practical realization. Such a phenomenon is proved macroscopically depending on a fact that by crushing the wood powder, the bulk specific gravity of the wood powder decreases and a bulky powder is formed. It was not known heretofore to use such a bulky powder for the treatment of the aqueous waste liquid. When carrying out the present invention, it is allowed for an effective bulk specific gravity of the wood powder to be 0.1 to 0.35 (preferably, 0.15 to 0.3 and more preferably, 0.2 to 0.25). Also, when using a rice bran as the dispersing agent of the present invention, it is allowed for the bulk specific gravity thereof to be 0.15 to 0.6 (preferably, 0.2 to 0.55 and more preferably, 0.25 to 0.5).

As a result after the inventors of the present invention studied in detail, as mentioned previously, the inventors of the present invention found out a phenomenon in which the performance of aforesaid dispersibility was exerted rapidly when the particle size of the wood powder becomes 50 mesh pass 50Wt% or more, was exerted increasingly when it becomes 100 mesh pass 50Wt% or more, was exerted further increasingly when it becomes 100 mesh pass 90Wt% or more, and the more minute the particle diameter becomes the more effect can be obtained. It is conceivable that such a phenomenon is caused by an increase of the specific surface area by the crushing as mentioned above, by a fact that an aggregate of micro fine fibers which occur by the crushing is formed by a micro structure abundant in concavity and convexity, and by a fact that substantial tissue walls of the dispersing agent are destroyed in the process of mechanical crushing and also the absorption of the water component into the substantial tissues is improved spectacularly. There did not exist such a description in a document in the past and it is a phenomenon discovered by the inventors of the present invention, and it was possible for the present invention to accomplish the completion based on such a discovery. An aggregate of micro fine fibers of the wood powder as described above is to present a bulky powder state macroscopically. The state of the gaps constituted by the micro fine fibers corresponds macroscopically to bulkiness, so that it is possible to presume the configuration of the micro fine fibers by knowing the bulkiness of the dispersing agent. According to a measurement of the inventors of the present invention, the bulk specific gravity was 0.22 with respect to the wood powder in which the particle size of the wood powder is 100 mesh pass 90Wt% or more.

As mentioned above, in order to adjust the dispersing agent so as to have a uniform fine size as much as possible, a special crushing process is required in case of, for example, a wood powder. It was found out that the uniformity of the dispersing agent by such crushing is a key of success and failure whether or not the object of the present invention (in other words, the object lies in that a preferable treatment of the aqueous waste liquid is possible in a short time period and concurrently, the treatment at the waste liquid occurrence spot can be executed smoothly) can be achieved. This matter is a fact that can be said also with respect to a dispersing agent (in particular, cellulose-based dispersing agent) other than aforesaid wood powder. For the dispersing agent used when carrying out the present invention, such as mentioned previously, a cellulose-based powder represented by a wood powder and a glucose-based powder represented by a rice bran are excellent in an aspect of applying a preferable property to the final solidification configuration of the aqueous waste liquid (that is, an aspect in which the solidified material does not have fluidity finally and is powdery without any sorts of slime feelings on the surface of the solidified material, so that it is very easy to handle it), in an aspect in which excellent flammability is applied in case of being treated as a flammable substance, or the like. In particular, the wood powder and the rice bran have remarkable effects as combustion additives which apply flammability to the final treatment object of the aqueous waste liquid.

As mentioned previously, the role of the dispersing agent used in the present invention is to avoid bonding among the individual fine particles of the polymer absorbent agent one other and to make the dispersing agent intervene between the particles of the polymer water-absorbing agent. Consequently, the dispersing agent used in the present invention is not always limited only by a cellulose-based dispersing agent and a glucose-based dispersing agent as described above, and it is possible for other various powders to be utilized as aforesaid dispersing agent if they are provided for that purpose. For example, it is allowed for aforesaid dispersing agent to be a starch powder, sugar, a polyvinylalcohol powder of synthetic polymer, gelatin, an organic compound of urea or the like, salt, sodium sulfate, sodium carbonate, or an inorganic compound of sodium bicarbonate or the like. However, from a viewpoint of treating the solidified aqueous waste liquid as a flammable substance, it is not recommended so much that aforesaid dispersing agent is an inorganic substance. Also, it is preferable for aforesaid dispersing agent to be an agent which is not dissolved into water, but according to the experiment of the inventors of the present invention, the dispersion effect can be exerted sufficiently even if it is an agent which is dissolved into water.

When the aqueous waste liquid is alkaline, it is also possible for the dispersing agent in the present invention to be added with a small amount of powdery weak acid as a neutralizer. It is allowed for such a neutralizer, for example, to be an organic acid including a carboxylic acid (specifically, a tartaric acid, an oxalic acid, a succinic acid, a citric acid, a maleic acid, a malic acid and a glutamic acid) and to be an inorganic acid presenting weak acidity by being dissolved into water (specifically, boric acid). In addition, it is also allowed for aforesaid neutralizer, for example, to be a high polymer compound including a carboxylic acid group (specifically, an alginic acid, a polyacrylic acid and a polymethacrylic acid). The weak acid as described above is in a powder state in which the fusion point is the ambient temperature or more, so that when such a weak acid is added by a proper amount to the dispersing agent in the present invention beforehand, the whole of the aqueous waste liquid and the treatment agent in present invention is maintained to be neutral in a case in which the aqueous waste liquid is alkaline. Consequently, the property of the produced solidified material will be stabilized along with time, so that it becomes unnecessary to hurry up the disposal of aforesaid solidified material. This fact is preferable, because time margin can be secured in the actual work operation.

It is allowed for the amount of the polymer water-absorbing agent used in the present invention to be 1/800 to 1/10 by the volume ratio with respect to the amount of the aqueous waste liquid of the treatment object (polymer water-absorbing agent/aqueous waste liquid). This volume ratio is preferably 1/600 to 1/20 and more preferably, 1/500 to 1/30. When this volume ratio is smaller than 1/800, solidification is insufficient and fluidity occurs for the whole of the aqueous waste liquid and the treatment agent, so that it becomes in a state which cannot be said as solidification. Conversely, when aforesaid volume ratio is larger than 1/10, aforesaid solidified material becomes a stiff bulk and therefore, difficulty occurs in the handling thereof.

The role of the dispersing agent used in the present invention lies, as mentioned above, in a fact that the dispersing agent intervenes between these powders or granular materials such that the respective powders or granular materials of the polymer water-absorbing agent used in the present invention are not mutually bonded. Consequently, it is reasonable to control the ratio of the polymer water-absorbing agent and the dispersing agent based on the volume ratio rather than to control it based on the weight ratio. Then, it is allowed for the volume ratio of the polymer water-absorbing agent with respect to the dispersing agent (polymer water-absorbing agent/dispersing agent), in which both the agents are respectively used in the present invention, to be 1/500 to 1/1. This volume ratio is preferably 1/100 to 1/2 and more preferably, 1/30 to 1/3. Even when this volume ratio becomes smaller than 1/500, there cannot be obtained increase in the effect of the dispersing agent and on the contrary, the property of the solidified material becomes in a too stiff state, so that it becomes difficult to handle the material. Conversely, when aforesaid volume ratio is larger than 1/1, the effect of the dispersing agent is insufficient and therefore, the particles of the polymer water-absorbing agent mutually become in a bonding state partially, so that it takes time for the absorption of the aqueous waste liquid and this is not preferable.

Desirable ranges of the two kinds of volume ratios of aforesaid first volume ratio (polymer water-absorbing agent/aqueous waste liquid) and aforesaid second volume ratio (polymer water-absorbing agent/dispersing agent) are as mentioned above. Consequently, similarly as these two kinds of volume ratios, there naturally exists also a desirable range of a third volume ratio (dispersing agent/aqueous waste liquid). More specifically, it is allowed for this third volume ratio to be in a range of 1/10 to 50 (preferably, 1/6 to 10 and more preferably, 1/4 to 5).

Aforesaid second volume ratio (that is, polymer water-absorbing agent/dispersing agent) in the present invention has been discussed heretofore from a viewpoint of the solidification of the aqueous waste liquid. However, when moving the viewpoint toward the disposing treatment of the solidified aqueous wastewater, specifically, in a case in which the dispersing agent is a flammable wood powder, that is profitable when incinerating the solidified aqueous waste liquid as a flammable garbage, because the garbage becomes extremely easy to burn. For one advantage of a fact that a cellulose-based wood powder or the like is recommended as the dispersing agent in the present invention, it should be emphasized also that the dispersing agent itself does work as a combustion aid. Consequently, in case of treating it as a flammable substance after the solidification of the aqueous waste liquid, it is profitable for aforesaid second volume ratio to be on the smaller one side (in other words, the side in which the volume of the dispersing agent is large). As mentioned above, in order to dispose the solidified aqueous waste liquid as a flammable garbage, in a case in which the cellulose-based dispersing agent used in the present invention is a wood powder, a cellulose powder or the like, the solidified aqueous waste liquid plays a role as a useful combustion aid sufficiently in an aspect in connection with the improvement of the flammable performance.

As the polymer water-absorbing agent used in the present invention, the best selection is, as mentioned previously, a sodium polyacrylate-based agent. In this case, the inventors of the present invention found out that owing to the shape and the size of the sodium polyacrylate-based particle, a large difference occurs in the speed and the operationability of the work operation for actually treating the aqueous waste liquid. It is preferable for the shape of the polymer water-absorbing agent to be a plate-like shape or a shape indicating an unusual shape in which the concavity and convexity thereof are complex and nonuniform rather than a bead-like shape of a spherical shape or the like. Then, the configuration of the shape of the polymer water-absorbing agent has an influence also on an absorbing speed of the aqueous waste liquid and also on the property of the final solidified body which is solidified in a bulk shape.

Also, it is allowed for the shape of the polymer water-absorbing agent to be a bead-like shape of a ball shape or the like, a shape of horn (horn shape), a plate-like shape or a shape indicating a complex, nonuniform and unusual shape in which there exist a crush-like protuberance and a dent mixedly, or the like. Then, for the purpose of the present invention, it is the most preferable for the shape of the polymer water-absorbing agent, in particular, to be a shape indicating a complex, nonuniform and unusual shape. In case of a polymer water-absorbing agent having a bead-like shape, a "slime" is applied to a bead surface, so that it happens that fluidity is applied to a solidified material on which such a slime is produced and consequently, it sometimes happens that the actual treatment work operation will become difficult. On the other hand, in case of a polymer water-absorbing agent presenting a nonuniform and unusual shape, it becomes extremely easy for the solidified material which became in a bulk shape to be handled. This fact is an important matter in an actual treatment work operation. It should be noted with respect to the size of the polymer water-absorbing agent that it is preferable for the major axis length of the particle thereof to be averagely around 1mm or less and actually, it is a desirable applicable range for aforesaid major axis length to be averagely 0.05mm to 1.0mm (preferably, 0.08mm to 0.9mm and more preferably, 0.1mm to 0.8mm).

In the present invention, it is often preferable from a viewpoint of workability if the aqueous waste liquid to be treated is collected in a container and thereafter, the treatment agent as described above is added to this aqueous waste liquid. It is allowed for the volume of such a container to be in a range of 3 to 200 liters (preferably, 5 to 100 liters and more preferably, 10 to 50 liters). Also, it is allowed for the amount of the aqueous waste liquid collected in such a container to be in a range of 2 or 2.5 liters to one hundred & several tens liters (preferably, 4 or 4.5 liters to 80 or 90 liters and more preferably, 7 or 8 liters to 40 or 45 liters).

In the present invention, it is allowed for the aqueous waste liquid to be a floor wax peeling waste liquid. In this case, the present invention will be applied to a treatment method of a floor wax peeling waste liquid. In this case, if a resin wax as a floor wax is exemplified, there can be cited a wax (for example, "Penguin Super Core U" manufactured by Penguin Wax Co., Ltd.) which is mixed by combining a bridge urethane-based wax (for example, "Surpass Plus" manufactured by Yuho Chemicals Inc.), a bridge acrylic-based wax (for example, "Emerald" manufactured by Yuho Chemicals Inc.), an acrylic resin and an urethane resin, or the like. Then, it is possible for the present invention to be widely applied with respect to the peeling waste liquid of various kinds of floor waxes including the resin wax as described above.

It is possible for a release agent used for peeling a floor wax as described above to use various sorts of agents. When exemplifying such a release agent, there can be cited "Squash" manufactured by Penguin Wax Co., Ltd., "hyper-remover" manufactured by Suisho Petrochemical Industry Co., Ltd and the like. It is possible for the present invention to be applied widely with respect to a floor wax peeling waste liquid which is peeled by using various kinds of release agents as described above.

In the present invention, it is allowed for the aqueous waste liquid to be an aqueous waste liquid which occurs in a medical facility. In this case in particular, it is preferable for the treatment agent used in the present invention to include at least one kind selected from a group which is composed of a sterilization agent, a fungicidal agent and a disinfecting agent (hereinafter, these three components are referred to as "aforesaid sterilization agent and the like") in addition to the polymer water-absorbing agent and the dispersing agent. When exemplifying an agent in a powder state within aforesaid sterilization agent and the like, there can be cited glutaraldehyde (sterilization agent), chlorhexidine gluconate, benzalkonium chloride, alkylpolyaminoethylglycine, amphoteric surfactant (above four kinds are all fungicidal agents) or the like. It is not always necessary for aforesaid sterilization agent and the like used in the present invention to be a powder-body, and it is also allowed to be an agent which is fundamentally in a liquid state such as povidone iodine, iodide solution, isopropanol, iodine tincture (above four kinds are all sterilization agents), phenol (fungicidal agent) and a saponated cresol solution (disinfecting agent), and it is also allowed to be an aqueous solution in which aforesaid sterilization agent of a powder state and the like is dissolved in water or the like. It should be noted, in a case in which aforesaid sterilization agent and the like is a liquid agent, that it is possible to use aforesaid liquid agent after the dispersing agent used in the present invention is added with this liquid agent and is absorbed in a dispersing agent beforehand. It should be noted that it is possible, if required, for aforesaid sterilization agent and the like to be used for the treatment of the aqueous waste liquid which occurs except in a medical facility.

### BRIEF DESCRIPTION OF DRAWINGS

FIG. 1 is a photomicrograph of a wood powder used in an inventive example 1 of the present invention; and
FIG. 2 is a photomicrograph of a rice bran used in an inventive example 8 of the present invention.

### BEST MODE FOR CARRYING OUT THE INVENTION

Next, it will be described in detail with respect to inventive examples 1 to 18 and comparative examples 1 to 5 of the present invention.

### Inventive Example 1

A vinyl chloride resin tile was laid on a floor of a corridor in a certain factory. Then, there was coated a resin wax on the floor surface which was the top surface of this floor (in other words, top surface of aforesaid vinyl chloride resin tile). It should be noted that one year or more elapsed from the time when the resin wax was coated on this floor surface and this floor surface became dirty drastically, so that there were carried out the peeling of the resin wax of this floor surface and recovery-beautification of this floor surface.

In this case, Squash(TM) which is a release agent manufactured by Penguin Wax Co., Ltd. was used as the release agent. Then, this Squash was coated on the dirty floor surface after diluting it by 5 times with water and it was left unattended for about 10 minutes, and thereafter, the peeling of the resin wax was carried out by a polisher. The peeling polluted water which was a peeling substance at that time was collected in a pail-can according to the common procedure. The total volume of this peeling polluted water as an aqueous waste liquid was about 12 liters. Also, a mixing powder-body which was prepared beforehand by mixing about 250g (whose volume was about 380 milliliters) of a sodium polyacrylate bridge body as a polymer water-absorbing agent, about 1.2 liters of a wood powder (100 mesh pass 90Wt% or more) as a dispersing agent and a citric acid 10g as a neutralizer was added to aforesaid peeling polluted water under a stirring condition. In this case, this powder-body was dispersed into the peeling polluted water uniformly and also easily. The release agent showed a strong alkaline state of pH13, but when measurement was carried out after the mixing powder-body was added, it became in a neutral state of pH7. Then, after about 4 minutes, the whole of the peeling polluted water and aforesaid mixing powder-body became an aggregate in which plural pieces of soft and also nonadhesive small bulks (in other words, granular materials) gather together in a state of easily becoming granular. Also, this aggregate was in a property in which it can be said that there exists no liquid at all. It should be noted that the wood powder used as a dispersing agent in this inventive example 1 had such a property as FIG. 1 in which the photomicrograph thereof is shown.

### Inventive Example 2

A polybag for disposal was put-in beforehand in a pail-can for collecting the peeling polluted water. Then, the peeling polluted water was put-in into this polybag. Also, in this inventive example 2, there was carried out completely the same operation as that of the case of aforesaid inventive example 1 except those matters. In this case, the phenomenon of aforesaid inventive example 1 was reproduced. Consequently, there existed the peeling polluted water in the polybag in a state of an aggregate in which plural pieces of small granular materials having a property of being handled easily gather together in a state of easily becoming granular. For this reason, after the polybag was lifted up from a pail-can and a proper spot of an upper portion of this polybag was tied with a string or the like it was possible to dispose this polybag (in other words, polybag containing peeling polluted water) without any treatment as a flammable garbage.

### Comparative Example 1

In this comparative example 1, there was used about 250g of a sodium polyacrylate bridge body as a polymer water-absorbing agent singularly as a treatment agent of the peeling polluted water. Then, a dispersing agent such as the wood powder or the like used in case of aforesaid inventive example 1 was not used at all. Also, in this comparative example 1, there was carried out completely the same operation as that of the case of aforesaid inventive example 1 except this matter. In case of this comparative example 1, even if how to make addition was devised in various ways such that when adding the polymer water-absorbing agent, a violent stirring was executed or an addition was executed little by little by spending time without adding it all at once, it was not possible to prevent a tendency in which the polymer water-absorbing agents gather each other and become a large bulk. Consequently, it happened that the necessary time for the polymer water-absorbing agent to absorb the peeling polluted water became 3 hours or more, so that it was utterly impossible to treat the peeling polluted water promptly at the peeling working spot.

### Comparative Example 2

In this comparative example 2, there was carried out completely the same operation as that of the case of aforesaid inventive example 1 other than that a sawdust was used as the dispersing agent instead of the wood powder used as the dispersing agent in aforesaid inventive example 1. In this case, with respect to the particles of the sawdust, about 90Wt% thereof was 20 mesh on (in other words, about 10Wt% thereof was 20 mesh pass). In this comparative example 2, a mixing powder-body which was prepared by mixing a sodium polyacrylate bridge body as a polymer water-absorbing agent and the sawdust as a dispersing agent was added to aforesaid peeling polluted water under a stirring condition. However, even if about 1 hour elapsed from the time when it was added in this manner, aforesaid peeling polluted water was not hardened and became a substance with fluidity of sol characteristic. Also, even if about 24 hours elapsed from the time when it was added as mentioned above, aforesaid peeling polluted water was a substance which can be said as in a gelled semisolid state. Then, in order to solidify the peeling polluted water in this gelled semisolid state, it was necessary to dry this peeling polluted water by hot air for 7 hours or more after pouring it into a tray. In this comparative example 2, it is conceivable that the reason why a result different from that of the case of aforesaid inventive example 1 was obtained is because the particle size of aforesaid sawdust was too large compared with the particle size of the wood powder used in aforesaid inventive example 1.

### Inventive Example 3

A vinyl chloride resin tile was laid on a floor of an office building. Then, with respect to the wax coated on the floor surface which was the top surface of this polyvinyl chloride resin tile, about 10 months period elapsed from the time when it was coated, so that dirty spots became fairly conspicuous. Therefore, there were carried out the peeling of the wax of this floor surface and recovery-beautification of this floor surface. In this case, it was not clear about what kind of wax was used as the wax of the floor surface. Then, a hyper-remover(TM) which was a release agent manufactured by Suisho Petrochemical Industry Co., Ltd was used as a release agent.In addition, the dilution ratio of the hyper-remover by water was as much as 20 times.

After this release agent was coated on the dirty floor surface, it was left unattended for about 15 minutes and thereafter, the peeling of the wax was carried out by using a polisher. The peeling polluted water which was a peeling substance at that time was collected in a pail-can according to the common procedure. Then, the total volume of this peeling polluted water was about 16 liters. Also, a mixing powder-body which was prepared beforehand by mixing about 300g of a sodium polyacrylate bridge body as a polymer water-absorbing agent and about 1.5 liters of a cellulose powder (whose granularity is 100 mesh pass 90Wt% or more and whose diameter is about 37µm) as a dispersing agent was added to aforesaid peeling polluted water under a stirring condition. It should be noted in the text that in case of aforesaid notation and a notation similar thereto, the notation means that particles other than 100 mesh pass (in other words, particles of 100 mesh on) and particles of 100 mesh pass are used in a state of being mixed together. In this case, this mixing powder-body was dispersed into the peeling polluted water immediately and also uniformly. Then, after about 5 minutes, the whole of the peeling polluted water and aforesaid powder-body became an aggregate in which plural pieces of soft and also nonadhesive small granular materials gather together in a state of easily becoming granular. Also, with respect to this aggregate including this peeling polluted water, there was no fluidity at all and this aggregate was in a property for which it can be said that there exists no liquid at all.

### Inventive Example 4

A vinyl chloride resin tile was laid on a floor of a corridor in a certain factory. Then, there was coated a wax on the floor surface which was the top surface of this floor. It should be noted that about 10 months or more elapsed from the time when the wax was coated on this floor surface and this floor surface became dirty drastically, so that there were carried out the peeling of the wax of this floor surface and recovery-beautification of this floor surface.

In this case, Hakuristar-8(TM) which is a release agent manufactured by Konishi Co., Ltd was used as the release agent. Then, this Hakuristar-8 was coated on the dirty floor surface after diluting it by 8 times with water and it was left unattended for about 12 minutes, and thereafter, the peeling of the wax was carried out by a polisher. The peeling polluted water which was a peeling substance at that time was collected in a pail-can according to the common procedure. The total volume of this peeling polluted water was about 13 liters. Also, a mixing powder-body was prepared beforehand by mixing about 270g (whose volume was about 400 milliliters) of a sodium polyacrylate bridge body as a polymer water-absorbing agent, 1.5 liters of a dried wood powder (120 mesh pass 90Wt% or more) as a dispersing agent and 15g of a citric acid as a neutralizer. Then, this mixing powder-body was added to the peeling polluted water in a pail-can under a stirring condition. This mixing powder-body was dispersed immediately into the peeling polluted water uniformly and also easily. The pH of the release agent before aforesaid mixing was 13 and presented a significant alkaline property, but when measurement was carried out after the mixing powder-body was added, the release agent had become in a neutral state (that is, pH7). Then, after about 2 minutes, the whole of this peeling polluted water and aforesaid mixing powder-body became an aggregate in which plural pieces of soft and also nonadhesive small granular materials gather together in a state of easily becoming granular. Also, this aggregate was in a property in which it can be said that there exists no liquid at all.

### Inventive Example 5

A red colored water-based paint was prepared in a preparation pot and thereafter, it was taken out for a manufactured article and subsequently, it happened that a yellow colored paint was to be prepared in the inside of aforesaid preparation pot. Consequently, the red colored water-based paint which remained in aforesaid preparation pot after finishing the preparation was washed by using water, and this red colored paint washing liquid was poured into another container (that is, storage container) and was stored therein. Then, this operation of washing and storage was repeated for several times (for example, 5 times), and the red colored paint washing liquid was collected in aforesaid storage container. It should be noted that the total amount of the red colored paint washing liquid collected in this storage container was about 14 liters.

Subsequently, a mixing powder-body which was prepared beforehand by mixing about 280g (whose volume was about 430 milliliters) of a sodium polyacrylate bridge body as a polymer water-absorbing agent and 2.0 liters of a wood powder (100 mesh pass 90Wt% or more) as a dispersing agent was added to the red colored paint washing liquid in aforesaid storage container under a stirring condition. Aforesaid powder-body was dispersed immediately into aforesaid red colored paint washing liquid uniformly and also easily. In this manner, although a large quantity of wood powders such as 2.0 liters was added to aforesaid red colored paint washing liquid, there was seen almost no rising of the liquid surface of this paint washing liquid. Then, after about 3 minutes from the time when aforesaid mixing powder-body was added, the whole of aforesaid paint washing liquid and aforesaid powder-body became an aggregate in which plural pieces of soft and also nonadhesive small granular materials gather together in a state of easily becoming granular. Also, when the aggregate of this small granular material was placed on a white colored paper for 15 minutes, there was observed no leaching of liquid at all from this aggregate to aforesaid paper. Further, an observation was carried out again after 60 minutes elapsed from the time when aforesaid aggregate was placed on aforesaid paper, but there was observed no leaching of liquid at all from this aggregate to aforesaid paper.

### Inventive Example 6

In this inventive example 6, similarly as that of the case of aforesaid inventive example 5, a water-based paint was prepared in a preparation pot and then, this prepared water-based paint was taken out for a manufactured article and thereafter, the water-based paint for which preparation was finished and which remains in aforesaid preparation pot was washed with water , and this washing liquid was stored in a storage container (whose volume was 18 liters). It should be noted that a polybag for disposal was put-in into this storage container beforehand and aforesaid paint washing liquid was poured into this polybag. The operation procedure up to now was the same as that of the case of aforesaid inventive example 5 except that a polybag for disposal was put-in into the storage container beforehand. The particle size of the wood powder used in this inventive example 6 was a size of 50 mesh pass 70Wt% or more. Also in this inventive example 6, there was reproduced the phenomenon in aforesaid inventive example 5. Also, there existed the whole of aforesaid paint washing liquid and aforesaid mixing powder-body in the polybag in a state of a sponge shaped aggregate in which plural pieces of small granular materials gather together in a state of easily becoming granular. Then, this sponge shaped aggregate was an aggregate having a property which was easy to be handled. Consequently, if a proper spot of an upper portion of this polybag was tied after aforesaid polybag was lifted up, it was possible to dispose this polybag directly as a flammable garbage.

### Comparative Example 3

In this comparative example 3, about 220g of a sodium polyacrylate bridge body as a polymer water-absorbing agent was singularly used, and a wood powder as a dispersing agent, which was used in case of aforesaid inventive example 5, was not used at all. Then, except this matter, there was carried out completely the same operation as that of the case of aforesaid inventive example 5. Also, in case of this comparative example 3, even if how to make addition was devised in various ways such that when adding the polymer water-absorbing agent, a violent stirring was executed or an addition was executed little by little by spending time without adding it all at once, it was not possible to prevent a tendency in which the polymer water-absorbing agents gather each other and become a large bulk. Consequently, it happened that the necessary time for the polymer water-absorbing agent to absorb the paint washing liquid became 5 hours or more, so that it was utterly impossible to treat the paint washing liquid promptly at the paint working spot.

### Comparative Example 4

In this comparative example 4, there was carried out completely the same operation as that of the case of aforesaid inventive example 5 other than that there was used a sawdust which was used in case of the comparative example 2 instead of the wood powder as the dispersing agent, which used in case of aforesaid inventive example 5. In this case, with respect to the particles of the sawdust, about 90Wt% thereof was 20 mesh on (in other words, about 10Wt% thereof was 20 mesh pass). In this comparative example 4, a mixing powder-body which was prepared by mixing a sodium polyacrylate bridge body as a polymer water-absorbing agent and the sawdust as a dispersing agent was added to aforesaid paint washing liquid under a stirring condition. Then, even if about 1 hour elapsed from the time when it was added in this manner, aforesaid paint washing liquid was not hardened and became a substance with fluidity of sol characteristic. Also, even if about 14 hours elapsed from the time when it was added as mentioned above, aforesaid paint washing liquid was a substance which can be said as in a gelled semisolid state. Then, in order to solidify this paint washing liquid, it was necessary to dry this paint washing liquid which was in a gelled semisolid state by hot air for about 7 hours after pouring it into a tray, so that the whole of aforesaid paint washing liquid became one large lump and there was difficulty in the handling thereof.

### Inventive Example 7

When used liquids of perm agents which are regularly used in a hairdresser (that is, perm-use waste liquids) were collected and stored in a polyethylene container without throwing them away, the whole quantity of this perm-use waste liquids became about 13 liters. Consequently, similarly as that of the case of aforesaid inventive example 5, a mixing powder-body which was prepared by mixing about 180g (whose volume was about 280 milliliters) of a sodium polyacrylate bridge body as a polymer water-absorbing agent and 1.0 liter of a wood powder (100 mesh pass 70Wt% or more) as a dispersing agent was added to aforesaid perm-use waste liquid in aforesaid polyethylene container while stirring it gently. This mixing powder-body was immediately dispersed uniformly and also easily. Then, after about 3 minutes from the time when aforesaid mixing powder-body was added, the whole of the perm-use waste liquid and aforesaid mixing powder-body became an aggregate in which plural pieces of soft and also nonadhesive small granular materials gather together in a state of easily becoming granular. Then, this aggregate was in a property in which it can be said that there exists no liquid at all.

### Inventive Example 8

A blue colored water-based paint was prepared in a preparation pot and then, this prepared blue colored water-based paint was taken out for a manufactured article and it happened that a red colored paint was to be prepared inside aforesaid preparation pot. Consequently, the blue colored water-based paint remained in aforesaid preparation pot was washed with water and this blue colored paint washing liquid was stored in another storage container. This operation was repeated for several times (for example, 5 times), and the blue colored paint washing liquid was collected in aforesaid storage container. The total amount of the blue colored paint washing liquid collected in this storage container was about 12 liters.

About 250g (whose volume was about 380 milliliters) of a sodium polyacrylate bridge body as a polymer water-absorbing agent and about 1.0 liter of a rice bran as a dispersing agent were mixed beforehand. Then, a powder-body made by mixing both of these agents was added to the blue colored paint washing liquid in aforesaid storage container under a stirring condition. This mixing powder-body was dispersed immediately into aforesaid blue colored paint washing liquid uniformly and also easily. Then, after about 2 minutes from the time when aforesaid mixing powder-body was added, the whole of aforesaid washing liquid and aforesaid mixing powder-body became an aggregate in which plural pieces of soft and nonadhesive small granular materials gather together in a state of easily becoming granular. Also, this aggregate was in a property in which it can be said that there exists no liquid at all. It should be noted that the rice bran used as a dispersing agent in this inventive example 8 had such a property as FIG. 2 in which the photomicrograph thereof is shown.

### Inventive Example 9

Residual bloods which occurred when blood tests were carried out in a hospital were collected and stored in a container for blood discharge. Then, a vinyl bag was put-in beforehand into another storage container and aforesaid residual bloods were injected from aforesaid container for blood discharge to this vinyl bag. In this case, the total amount of the residual bloods collected in the vinyl bag of aforesaid storage container was about 230 milliliters. On the other hand, a mixing powder-body was prepared beforehand by mixing about 2.2g of a sodium polyacrylate bridge body as a polymer water-absorbing agent, 5.0g (about 23 milliliters) of a wood powder (100 mesh pass 90Wt% or more) as a dispersing agent and 1.5g of benzalkonium chloride as a sterilization agent uniformly. Then, this mixing powder-body was added to the vinyl bag in which aforesaid residual bloods were stored, and was shaken and mixed therein. Aforesaid mixing powder-body was immediately dispersed into the residual bloods uniformly and also easily, and absorbed the residual bloods. Then, after about 5 minutes from the time when aforesaid mixing powder-body was added, the whole of aforesaid residual bloods and aforesaid mixing powder-body became an aggregate in which plural pieces of soft and nonadhesive small granular materials gather together in a state of easily becoming granular. Also, this aggregate was in a property in which it can be said that there exists no blood at all. For this reason, after a proper spot of an upper portion of aforesaid vinyl bag was tied with a string or the like, it was possible to incinerate this vinyl bag directly without leaking even one drop of the residual blood from this vinyl bag.

### Inventive Example 10

About 250g (whose volume was about 1.2 liters) of a wood powder (100 mesh pass 90Wt% or more) as a dispersing agent was added with 150 milliliters of a 5% (w/v) chlorhexidine gluconate aqueous solution as a sterilization agent and when it was stirred, it happened that the wood powder had absorbed the chlorhexidine gluconate aqueous solution.Subsequently, a hygienic powder-body was prepared by adding about 7g of a sodium polyacrylate bridge body as a polymer water-absorbing agent to aforesaid wood powder which absorbed the chlorhexidine gluconate aqueous solution in this manner and by mixing them uniformly.

The hygienic powder-body prepared as mentioned above was sprinkled on a vomitus of a patient so as to cover the whole vomitus thereof. Then, when aforesaid vomitus was swept and collected after it was left unattended for about 5 minutes from the time when the sprinkle was carried out in this manner, the whole of aforesaid vomitus and aforesaid hygienic powder-body became an aggregate in which plural pieces of powdery small granular materials gather together. Consequently, the operation of picking-up and collecting this aggregate in the vinyl bag was simple, so that it was possible to deal with all of aforesaid vomitus safely. Also, after this treatment was carried out, there was no vestige of a polluted substance of vomitus or the like in the vicinity of the spot at which the vomitus existed and it was possible to carry out the treatment of the vomitus hygienically and also cleanly.

### Inventive Example 11

A patient of an infectious disease, who often experienced sputum suctions due to excessive secretions, discharged a polluted liquid containing sputum. Then, for the treatment of this polluted liquid, there was used the hygienic powder-body prepared in aforesaid inventive example 10. The total amount of aforesaid polluted liquid containing sputum was about 110 milliliters. On the other hand, a vinyl bag was put-in beforehand in a beaker whose volume was 200 milliliters. Then, aforesaid polluted liquid containing sputum was poured into this vinyl bag. Also, the hygienic powder-body prepared in aforesaid inventive example 10 (in other words, a mixing powder-body of a wood powder, a sodium polyacrylate bridge body and chlorhexidine gluconate) was added from the upside of aforesaid polluted liquid containing sputum inside aforesaid vinyl bag. Even being left unattended, this hygienic powder-body began sinking quietly into aforesaid polluted liquid containing sputum. Then, after 5 minutes from the time when aforesaid hygienic powder-body was added in aforesaid vinyl bag, the whole of aforesaid polluted liquid containing sputum and aforesaid hygienic powder-body was solidified. For this reason, after aforesaid vinyl bag was picked up from aforesaid beaker, a proper spot of an upper portion of this vinyl bag was tied with a string or the like and thereafter, when this vinyl bag was unstiffened so as to be grabbed repeatedly from the outside of this vinyl bag, it was possible to convert the content of this vinyl bag (in other words, the whole of the sputum polluted liquid and the hygienic powder-body) to a powdery particle group. As a result thereof, it was possible to deal with aforesaid polluted liquid containing sputum, which has infectiousness, entirely hygienically.

### Inventive Example 12

It was scheduled such that a red colored water-based paint was prepared in a preparation pot, then, this prepared red colored water-based paint was taken out from the preparation pot as a manufactured article and thereafter, a yellow colored paint was to be prepared by aforesaid preparation pot. Consequently, the red colored water-based paint which remained in aforesaid preparation pot after finishing the preparation was washed by using water, and this red colored paint washing liquid was poured into another container (that is, storage container) and was stored therein. Then, by repeating this operation of washing and storage by several times (for example, 5 times), the red colored paint washing liquid was collected in aforesaid storage container. The total amount of the red colored paint washing liquid collected in this storage container was about 14 liters.

Subsequently, a mixing powder-body which was adjusted beforehand by mixing about 280g (whose volume was about 430 liters) of a sodium polyacrylate bridge body as a polymer absorbent agent and 2.0 liters of a wood powder (100 mesh pass 90Wt% or more) as a dispersing agent was added to the red colored paint washing liquid in aforesaid storage container under a stirring condition. An aspect in which the operation in this inventive example 12 is different from the operation of aforesaid inventive example 5 lies in a fact that the wood powder used in this inventive example 12 was dried before the use thereof and the percentage of moisture content thereof was adjusted to be 4Wt% or less. The reason of carrying out the adjustment in this manner was because of investigating what an influence a change in a drying state of the wood powder in a winter season or during storage would exert to the operation. In this case, aforesaid mixing powder-body stayed on an upper portion of the red colored paint washing liquid even if it was stirred and was not easily mixed uniformly into this washing liquid. Then, when the whole of aforesaid mixing powder-body and aforesaid washing liquid was violently stirred for a while, aforesaid mixing powder-body was dispersed rapidly and uniformly into aforesaid washing liquid and was mixed therewith. However, time and labor are required for the uniform mixing, so that this matter is an important knowledge as a matter which brings up a problem about the operation. Here, as for the reason why aforesaid mixing powder-body was not easily mixed into aforesaid washing liquid in this manner, it is conceivable that there occurred a phenomenon in which the wood powder repelled a water component temporarily because the front surface of the wood powder was dried and was rendered to be waterproof. Then, it is assumed that once the front surface of the wood powder became wetted, thereafter, a similar phenomenon as that of the case of aforesaid inventive example 5 was reproduced.

### Inventive Example 13

The operation procedure of this inventive example 13 was almost the same as the operation procedure of aforesaid inventive example 12. However, in this inventive example 13, there was used a wood powder of moisture content 14Wt% in which water was added to the dry wood powder used in aforesaid inventive example 12 for the purpose of comparison. In this inventive example 13, the phenomenon in aforesaid inventive example 5 was completely reproduced, so that it was confirmed that the percentage of moisture content of the wood powder as a dispersing agent played an important role for uniform and also immediate mixing-ability of aforesaid mixing powder-body. This fact proves that the wood powder is rendered to be hydrophilic caused by an effect of the water component and this undertakes an important role on the infiltration of the red colored paint washing liquid into the inside of the fibrillated wood powder. Then, these phenomena indicate how important the management of the percentage of moisture content of the dispersing agent is in the practical realization thereof. Also, when carrying out this inventive example 13, it was not possible for the scattering of the wood powder to be seen at all. Then, after the wood powder was dried until the percentage of moisture content thereof became 3Wt% for the purpose of comparison and when the same process was carried out by using this wood powder, the wood powder was scattered during this process and therefore, even if the whole of aforesaid mixing powder-body and aforesaid washing liquid was stirred, the wood powder was only turned around on the liquid surface of aforesaid washing liquid and was not blended right in with aforesaid washing liquid easily. Consequently, there was difficulty in the dispersion of aforesaid mixing powder-body into aforesaid washing liquid and it was necessary for the worker to put on a mask in order to avoid the inhaling of the scattering wood powder which was scattered from aforesaid wood powder.

### Inventive Example 14

The operation procedure of this inventive example 14 was almost the same as the operation procedure of aforesaid inventive example 13. However, in this inventive example 14, there were respectively prepared a first kind of powder-body for treatment including the wood powder of moisture content 14Wt% used in aforesaid inventive example 13 as a dispersing agent and a second kind of mixing powder-body for treatment including a mixing powder-body of moisture content 14Wt% of a wood powder and a rice bran (mixing weight ratio 4:1) as a dispersing agent. Then, only by putting-in these two kinds of mixing powder-bodies for treatment onto aforesaid red colored paint washing liquid respectively, there were observed aforesaid mixing powder-bodies for treatment and aforesaid washing liquid without using any stirring means at all. In this case, surprisingly, both of the first kind of mixing powder-body for treatment and the second kind of mixing powder-body for treatment started sinking rapidly into this washing liquid from the contact region with respect to the washing liquid. Then, after one minute from the time when the sinking was started in this manner, all of the mixing powder-bodies for treatment sank-down and further, after two minutes from the time when the sinking-down was started as mentioned above, the solidification of the whole system was completed. This inventive example 14 indicates that a preferable effect as a treatment agent is exerted sufficiently even without using stirring means if a water component is included in aforesaid wood powder and aforesaid rice bran by a constant amount and consequently, it was an example which proves a new and also important knowledge with respect to this item.

### Inventive Example 15

The condition in this inventive example 15 was substantially the same as the condition in aforesaid inventive example 14. However, in this inventive example 15, there were prepared a first kind of treatment agent including the wood powder of moisture content 65Wt% as a dispersing agent and a second kind of treatment agent including a mixing powder-body of moisture content 70Wt% of a wood powder and a rice bran (mixing weight ratio 4:1) as a dispersing agent. Then, the condition of this inventive example 15 was different from the condition of aforesaid inventive example 14 only in the aspect that these two kinds of treatment agents were used therein. With respect to these wood powder and rice bran whose percentage of moisture contents were large, interestingly, the sinking speeds thereof were too fast, so that the put-in wood powder and rice bran were concentrated a little bit nonuniformly on the bottom of the container. Consequently, there existed dissatisfaction about the whole uniform solidification phenomenon which was desired to occur and in order to obtain a satisfactory result, it was necessary to stir the whole of aforesaid washing liquid and aforesaid treatment agent simply. Consequently, there was suggested a possibility in which nonuniformity is induced in the solidification when the percentage of moisture content of the mixing powder-body for dispersion as a dispersing agent exceeds 65Wt% and it was found out that it is preferable for the percentage of moisture content to be 60Wt% or less.

### Comparative Example 5

In this comparative example 5, there was carried out completely the same operation as that of the case of aforesaid inventive example 9 other than that there was used a sawdust which was used in case of the comparative example 2 instead of the wood powder used as the dispersing agent in case of aforesaid inventive example 9. With respect to the particles of the sawdust, the 90Wt% thereof was 20 mesh on. In this comparative example 5, a sodium polyacrylate bridge body as a polymer water-absorbing agent and a sawdust as a dispersing agent were mixed first, and a mixing powder-body was produced. Further, benzalkonium chloride 1.5g as a sterilization agent was added to this mixing powder-body and by carrying out a uniform mixing, a preparation powder-body as a treatment agent was prepared. Then, similarly as the case of aforesaid inventive example 9, this preparation powder-body was added to the vinyl bag in which the residual bloods were stored, and was shaken and mixed therein. However, in this comparative example 5, even about one hour elapsed from the time when it was added in this manner, aforesaid residual blood was not solidified such as the case of aforesaid inventive example 9 and was a substance which can be said as in a gelled semisolid state.

### Inventive Example 16

A polluted liquid including a sputum of a patient of an infectious disease who often experienced sputum suctions due to excessive secretions was sucked and discharged. Then, for the treatment of this polluted liquid, there was used a hygienic powder-body substantially the same as that which was prepared in aforesaid inventive example 10. The total amount of aforesaid polluted liquid containing sputum was about 110 milliliters. On the other hand, a vinyl bag was put-in beforehand in a beaker whose volume was 200 milliliters. Then, aforesaid polluted liquid containing sputum was poured into this vinyl bag. Also, a hygienic powder-body substantially the same as the hygienic powder-body prepared in aforesaid inventive example 10 was added to aforesaid polluted liquid containing sputum in aforesaid vinyl bag from the above thereof. The wood powder used in this inventive example 16 was different from the wood powder used in aforesaid inventive example 10 in an aspect in which a water component of 15Wt% was contained beforehand. Even being left unattended without doing anything, this hygienic powder-body began sinking quietly into aforesaid polluted liquid containing sputum. Then, after 5 minutes from the time when the hygienic powder-body was added as mentioned above, the whole of aforesaid polluted liquid containing sputum and aforesaid hygienic powder-body was solidified. Consequently, aforesaid vinyl bag was picked up from aforesaid beaker and thereafter, a proper spot of an upper portion of this vinyl bag was tied with a string or the like. Then, when this vinyl bag was unstiffened so as to be grabbed repeatedly from the outside of this vinyl bag, it was possible to convert the content of this vinyl bag to a particle group of a powdery state. As a result thereof, it was possible to deal with aforesaid polluted liquid containing sputum, which has infectiousness, entirely hygienically.

### Inventive Example 17

Although the operation procedure in this inventive example 17 was substantially the same as the operation procedure of the case of aforesaid inventive example 9, the wood powder used in this inventive example 17 was made to contain a water component by 14Wt% beforehand. In this case, observation was made only by putting-in the mixing powder-body for treatment into the residual blood from the above thereof without using any stirring means at all. Surprisingly, the mixing powder-body for treatment started sinking spontaneously from a contact portion with respect to the residual blood. Then, after about 5 minutes from this start of sinking, all of the mixing powder-body for treatment sank and further, after about 6 minutes from aforesaid start of sinking, the whole of the mixing powder-body for treatment and the residual blood had completed the solidification thereof. This inventive example 17 indicates that a preferable effect as a treatment agent can be exerted sufficiently even without using stirring means if a water component is included in aforesaid mixing powder-body by a constant amount and consequently, it was an example which proves a new and also important knowledge with respect to this item.

### Inventive Example 18

The operation procedure in this inventive example 18 is the same as the operation procedure in aforesaid inventive example 10 except the matter which will be described next. More specifically, in this inventive example 18, about 250g (whose volume was about 1.2 liters) of a wood powder (100 mesh pass 90Wt% or more) as a dispersing agent was added with 40 milliliters of a 5% (w/v) cresol aqueous solution as a disinfecting agent and was stirred. In this case, it happened that the wood powder had absorbed the cresol aqueous solution. Subsequently, a hygienic powder-body was prepared by adding about 6g of a sodium polyacrylate bridge body as a polymer water-absorbing agent to aforesaid wood powder which absorbed the cresol aqueous solution in this manner and by mixing them uniformly.

The hygienic powder prepared as mentioned above was sprinkled on a vomitus of a patient so as to cover the whole vomitus thereof. Then, when aforesaid vomitus was swept and collected after it was left unattended for about 5 minutes from the time when the sprinkle was carried out in this manner, the whole of aforesaid vomitus and aforesaid hygienic powder-body became an aggregate in which plural pieces of small granular materials of a powdery state gather together. Consequently, the operation of picking-up and collecting this aggregate in the vinyl bag was simple, so that it was possible to deal with all of aforesaid vomitus safely and also hygienically. Also, after this treatment was carried out, there was no vestige of the polluted substance and it was possible to carry out the treatment of the vomitus hygienically and also cleanly.

## Claims

1. In a treatment agent which is added to an aqueous waste liquid and which is for treating this aqueous waste liquid physically, a treatment agent for an aqueous waste liquid **characterized by** comprising:
a polymer water-absorbing agent and a dispersing agent mixed with said polymer water-absorbing agent in order to disperse this polymer water-absorbing agent in said aqueous waste liquid, wherein
it is constituted, when being added to said aqueous waste liquid, such that the whole of said aqueous waste liquid and said treatment agent is solidified to an aggregate in which plural crushed sponge-like pieces of granular materials having sizes averagely in a range of 0.2mm to 10mm (preferably, 0.25mm to 8mm and more preferably, 0.3mm to 6mm) gather together.

2. The treatment agent according to claim 1, **characterized in that** said polymer water-absorbing agent contains, as a main component thereof, at least one kind which is selected from a group composed of sodium polyacrylate, a bridge body of sodium polyacrylate, a copolymer of sodium polyacrylate and a bridge body of a copolymer of sodium polyacrylate.

3. The treatment agent according to claim 1 or 2, **characterized in that** the major axis length of each particle of said polymer water-absorbing agent has a length in a range of averagely 0.05mm to 1.0mm (preferably, 0.08mm to 0.9mm and more preferably, 0.1mm to 0.8mm).

4. The treatment agent according to claim 1, 2 or 3, **characterized in that** said dispersing agent contains, as a main component thereof, at least one kind which is selected from a group composed of a wood powder, a cellulose powder, a powder formed by crushing a dried dead-grass and a rice bran.

5. The treatment agent according to any one of claims 1 to 4, **characterized in that** said dispersing agent contains at least one kind within a wood powder and a rice bran as a main component thereof.

6. The treatment agent according to any one of claims 1 to 5, **characterized in that**
said dispersing agent contains a wood powder and a rice bran as main components thereof,
said wood powder is 40Wt% to 97Wt% (preferably, 60Wt% to 96Wt% and more preferably, 70Wt% to 95Wt%) of said dispersing agent, and
said rice bran is 3Wt% to 60Wt% (preferably, 4Wt% to 40Wt% and more preferably, 5Wt% to 30Wt%) of said dispersing agent.

7. The treatment agent according to claim 4, 5 or 6, **characterized in that**
said wood powder is crushed finely and is constituted as an aggregate in which plural pieces of granular material which gather together in a state in which a large number of strings of microfibrils are entangled one another further gather together; and
said rice bran is constituted as an aggregate in which plural pieces of granular bodies whose surfaces are abundant in variety and are abundant in nonuniform concavity and convexity gather together.

8. The treatment agent according to any one of claims 4 to 7, **characterized in that** said wood powder is crushed finely and this wood powder is 50 mesh pass 50Wt% or more (preferably, 100 mesh pass 50Wt% or more, and more preferably, 100 mesh pass 90Wt% or more).

9. The treatment agent according to any one of claims 4 to 8, **characterized in that**
the bulk specific gravity of said wood powder is in a range of 0.1 to 0.35 (preferably, 0.15 to 0.3 and more preferably, 0.2 to 0.25), and
the bulk specific gravity of said rice bran is in a range of 0.15 to 0.6 (preferably, 0.2 to 0.55 and more preferably, 0.25 to 0.5).

10. The treatment agent according to any one of claims 1 to 9, **characterized in that** the water component contained in said dispersing agent is in a range of 4Wt% to 60Wt% (preferably, 6Wt% to 40Wt% and more preferably, 8Wt% to 35Wt%).

11. The treatment agent according to any one of claims 1 to 10, **characterized by** further comprising, in addition to said polymer water-absorbing agent and said dispersing agent, at least one kind which is selected from a group composed of a sterilization agent, a fungicidal agent and a disinfecting agent.

12. The treatment agent according to any one of claims 1 to 11, **characterized in that** the volume ratio of said polymer water-absorbing agent with respect to said dispersing agent is in a range of 1/500 to 1/1 (preferably, 1/100 to 1/2 and more preferably, 1/30 to 1/3).

13. A treatment method of an aqueous waste liquid so as to treat said aqueous waste liquid physically by adding a treatment agent to the aqueous waste liquid, **characterized in that**
said treatment agent comprises a polymer water-absorbing agent and a dispersing agent mixed with said polymer water-absorbing agent in order to disperse this polymer water-absorbing agent in said aqueous waste liquid, wherein
by adding said treatment agent to said aqueous waste liquid, the whole of said aqueous waste liquid and said treatment agent is to be solidified to an aggregate in which plural crushed sponge-like pieces of granular materials having sizes averagely in a range of 0.2mm to 10mm (preferably, 0.25mm to 8mm and more preferably, 0.3mm to 6mm) gather together.

14. The treatment method according to claim 13, **characterized in that** said polymer water-absorbing agent contains, as the main component thereof, at least one kind selected from a group composed of sodium polyacrylate, a bridge body of sodium polyacrylate, a copolymer of sodium polyacrylate and a bridge body of a copolymer of sodium polyacrylate.

15. The treatment method according to claim 13 or 14, **characterized in that** the major axis length of the particle of said polymer water-absorbing agent is averagely 0.05mm to 1.0mm (preferably, 0.08mm to 0.9mm and more preferably, 0.1mm to 0.8mm).

16. The treatment method according to claim 13, 14 or 15, **characterized in that** said dispersing agent contains, as a main component thereof, at least one kind which is selected from a group composed of a wood powder, a cellulose powder, a powder formed by crushing a dried dead-grass and a rice bran.

17. The treatment method according to any one of claims 13 to 16, **characterized in that** said dispersing agent contains at least one kind within a wood powder and a rice bran as a main component thereof.

18. The treatment method according to any one of claims 13 to 17, **characterized in that**
said dispersing agent contains a wood powder and a rice bran as main components thereof,
said wood powder is 40Wt% to 97Wt% (preferably, 60Wt% to 96Wt% and more preferably, 70Wt% to 95Wt%) of said dispersing agent, and
said rice bran is 3Wt% to 60Wt% (preferably, 4Wt% to 40Wt% and more preferably, 5Wt% to 30Wt%) of said dispersing agent.

19. The treatment method according to claim 16, 17 or 18, **characterized in that**
said wood powder is crushed finely and is constituted as an aggregate in which plural pieces of granular material which gather together in a state in which a large number of strings of microfibrils are entangled one another further gather together; and
said rice bran is constituted as an aggregate in which plural pieces of granular bodies whose surfaces are abundant in variety and are abundant in nonuniform concavity and convexity gather together.

20. The treatment method according to any one of claims 16 to 19, **characterized in that** said wood powder is crushed finely and this wood powder is 50 mesh pass 50Wt% or more (preferably, 100 mesh pass 50Wt% or more, and more preferably, 100 mesh pass 90Wt% or more).

21. The treatment method according to any one of claims 16 to 20, **characterized in that**
the bulk specific gravity of said wood powder is in a range of 0.1 to 0.35 (preferably, 0.15 to 0.3 and more preferably, 0.2 to 0.25), and
the bulk specific gravity of said rice bran is in a range of 0.15 to 0.6 (preferably, 0.2 to 0.55 and more preferably, 0.25 to 0.5).

22. The treatment method according to any one of claims 13 to 21, **characterized in that** the water component contained in said dispersing agent is in a range of 4Wt% to 60Wt% (preferably, 6Wt% to 40Wt% and more preferably, 10Wt% to 35Wt%).

23. The treatment method according to any one of claims 13 to 22, **characterized in that** said aqueous waste liquid is collected in a container whose volume is in a range of 3 to 200 litters (preferably, 5 to 100 litters and more preferably, 10 to 50 litters) and thereafter, said treatment agent is added to said aqueous waste liquid.

24. The treatment method according to any one of claims 13 to 22, **characterized in that** the volume ratio of said polymer water-absorbing agent with respect to said dispersing agent is in a range of 1/500 to 1/1 (preferably, 1/100 to 1/2 and more preferably, 1/30 to 1/3).

25. The treatment method according to any one of claims 13 to 24, **characterized in that** the volume ratio of said polymer water-absorbing agent with respect to said aqueous waste liquid is in a range of 1/800 to 1/10 (preferably, 1/600 to 1/20 and more preferably, 1/500 to 1/30).

26. The treatment method according to any one of claims 13 to 25, **characterized in that** the volume ratio of said dispersing agent with respect to said aqueous waste liquid is in a range of 1/10 to 50 (preferably, 1/6 to 10 and more preferably, 1/4 to 5).

27. The treatment method according to any one of claims 13 to 26, **characterized in that** said aqueous waste liquid is an alkaline aqueous waste liquid, and said treatment agent further contains an organic carboxylic acid.

28. The treatment method according to claim 27, **characterized in that** said organic carboxylic acid is a citric acid.

29. The treatment method according to any one of claims 13 to 28, **characterized in that** said aqueous waste liquid is a floor wax peeling waste liquid, and said treatment method is a treatment method the floor wax peeling waste liquid.

30. The treatment method according to any one of claims 13 to 29, **characterized in that** said treatment agent further includes at least one kind which is selected from a group composed of a sterilization agent, a fungicidal agent and a disinfecting agent.

31. The treatment method according to claim 30, **characterized in that** said aqueous waste liquid is a aqueous waste liquid which occurs in a medical facility.
